Europäisches Patentamt

European Patent Office

Office européen des brevets

(11) Publication number: **0 357 444**
A2

# EUROPEAN PATENT APPLICATION

(21) Application number: **89308862.5**

(51) Int. Cl.5: **G 06 F 15/66**

(22) Date of filing: **01.09.89**

(30) Priority: **02.09.88 US 240855**

(43) Date of publication of application:
**07.03.90 Bulletin 90/10**

(84) Designated Contracting States: **DE FR GB NL**

(71) Applicant: **TEKTRONIX, INC.**
**Howard Vollum Park 14150 S.W. Karl Braun Drive**
**Beaverton Oregon 97005 (US)**

(72) Inventor: **Shaver, Christopher D.**
**7040 S.W. Elmhurst**
**Tigard Oregon 97223 (US)**

(74) Representative: **Burke, Steven David et al**
**R.G.C. Jenkins & Co. 26 Caxton Street**
**London SW1H 0RJ (GB)**

(54) Dynamically configurable, demand driven data processing pipeline.

(57) A dynamically configurable data processing pipeline has been described having a set of stages, each carrying out a separate data processing operation. The pipeline is demand driven in that stages obtain input data by calling preceding stages, and when called each stage processes its input data to produce output data returned to its caller. A stage determines which other stage or stages to call by inspecting one or more entries in the pipeline description table containing pointers to the other stages. The pipeline controller responds to input commands requesting various types of pipeline data processing operations by adjusting the pointers in the pipeline description table so that only stages necessary to execute the command are called.

FIG.3

Description

# DYNAMICALLY CONFIGURABLE, DEMAND DRIVEN DATA PROCESSING PIPELINE

## Cross-References to Related Applications

Co-pending U.S. patent application No. 07/239,736, entitled HALF TONING PIXEL PROCESSOR, filed 2nd September 1988, (corresponding to European patent application No. , filed simultaneously herewith, Agent's Ref. J.19411 EP) describes and claims a pixel processor utilized in the preferred embodiment of the present invention. Co-pending U.S. patent application No. 07/239,875, entitled SINGLE BUS DATA PROCESSING PIPELINE, filed 2nd September 1988, (corresponding to European patent application No. , filed simultaneously herewith, Agent's Ref. J.19410 EP) describes and claims a single bus data pipeline architecture utilized in the preferred embodiment of the present invention.

## Background of the Invention

The present invention relates to data processing pipelines and in particular to a dynamically configurable, demand driven data processing pipeline.

A data processing pipeline employs a set of stages to carry out a sequence of processing steps. The first stage receives and processes pipeline input data and passes its output to a next stage of the pipeline. Each subsequent stage receives its input data from a preceding stage, performs some operation on that data to generate output data, and then passes the result to a next stage or out of the pipeline. In some systems a single computer processor implements every stage of a pipeline, a separate software routine controlling each stage. Other systems implement various stages using separate computer processors or dedicated hardware logic.

A typical laser, ink jet or impact type dot matrix printer generates a printed page as an array of dots, or pixels, and selectively inks ("turns on") various pixels of the array to produce a printed page. Each bit or set of bits of the stored bit map defines the on/off state or color of each pixel of the array, and a printer driver reads out the bit map and controls a printer so that it prints the graphic design accordingly. However, an object-oriented graphic design system usually describes, manipulates and stores a graphic design not as a bit map but in the form of a high level picture description. A picture description may describe a rectangle by indicating coordinates of opposing corners and various attributes of the rectangle such as line thickness, color, and fill pattern. A graphics pipeline converts the high level picture description into a bit map when a user requests a print out of the graphic design.

Such a graphics pipeline may, for example, employ a stage for converting data describing a rectangle into data describing a set of adjacent lines forming the rectangle. Another stage may convert data describing a curved line to data describing a set of straight lines approximating the curved line. A subsequent stage converts the line data output of the rectangle stage or the curve line approximator stage into bit map data. In such application the sequence of operations performed by a data processing pipeline on input data can vary depending on the nature of the input data. Usually the input data includes self-identifying header information, and each stage looks at the header information to determine the nature of the data.

When incoming picture description data describes an object other than a rectangle, the rectangle converter stage does not operate on the input data but simply passes it on to the next stage of the pipeline. Similarly if input data to the curve line approximator stage indicates that the input data describes something other than a curved line, the curved line approximator stage passes the data on to the next stage without operating on it.

Since a high level picture description may describe many different types of graphic objects, a graphic pipeline operating on such a picture description may employ many different stages to handle the various types of data input to the pipeline. However, some stages rarely do more than look at the data and pass it on. For example when a particular picture has few curved lines, the curve line approximator stage is unnecessary when processing most of the picture. But the pipeline must still incorporate the curve line approximator to process the data describing the few curved lines. Since various types of input data pass through many stages not operating on the data, the additional stages degrade processing speed.

## Summary of the Invention

In accordance with an aspect of the invention, a dynamically configurable data processing pipeline has a set of stages, each carrying out a separate data processing operation. The pipeline is "demand driven"; stages other than a first stage of the pipeline obtain input data by invoking operation of ("calling") one or more preceding pipeline stages, and when called, each stage obtains and processes its input data to produce output data returned to its caller.

In accordance with another aspect of the invention, a stage determines which other stage or stages to call by inspecting one or more entries in a pipeline description table containing pointers to software routines implementing the other stages. A pipeline controller responds to input commands requesting various sequences of data processing operations by adjusting the pointers in the pipeline description table so that only stages necessary to carry out a requested sequence of operations are called. Since the controller excludes unnecessary stages from the pipeline when executing each particular command, the pipeline operates more quickly and efficiently than a conventional pipeline having a fixed configuration.

It is accordingly an object of the invention to provide an improved data processing pipeline capable of performing various sequences of data processing operations on input data, the pipeline being dynamically configurable to include only those stages required to carry out each particular sequence of operations.

The subject matter of the present invention is particularly pointed out and distinctly claimed in the concluding portion of this specification. However, both the organization and method of operation of the invention, together with further advantages and objects thereof, may best be understood by reference to the following description taken with the accompanying drawings wherein like reference characters refer to like elements.

Brief Description of the Drawings

FIG. 1 is a block diagram illustrating a graphics design and printing system;

FIG. 2 illustrates data flow through the graphics design and printing system of FIG. 1;

FIG. 3 is a block diagram of a dynamically configurable, demand driven graphics pipeline in accordance with the present invention;

FIG. 4 is a flow chart illustrating operation of a PATH-READER stage of the graphics pipeline of FIG. 3;

FIG. 5 is a flow chart illustrating operation of a CLIPPATH-WRITER stage of the graphics pipeline of FIG. 3;

FIG. 6 is a flow chart illustrating operation of a CURVE-FLATTENER stage of the graphics pipeline of FIG. 3;

FIG. 7 is a flow chart illustrating operation of a DASHER stage of the graphics pipeline of FIG. 3;

FIG. 8 is a flow chart illustrating operation of a STROKER stage of the graphics pipeline of FIG. 3;

FIG. 9 is a flow chart illustrating operation of a CLIPPER stage of the graphics pipeline of FIG. 3;

FIG. 10 is a flow chart illustrating operation of a DECOMPOSER stage of the graphics pipeline of FIG. 3;

FIG. 11 is a flow chart illustrating operation of a software portion of a PIXELATOR stage of the graphics pipeline of FIG. 3; and

FIG. 12 is a block diagram illustrating data flow through the graphics pipeline of FIG. 3 when the pipeline performs a simple fill operation;

FIG. 13 is a block diagram illustrating data flow through the graphics pipeline of FIG. 3 when the pipeline performs a clipped fill operation;

FIG. 14 is a block diagram illustrating data flow through the graphics pipeline of FIG. 3 when the pipeline performs a stroke operation without clipping;

FIG. 15 is a block diagram illustrating data flow through the graphics pipeline of FIG. 3 when the pipeline performs a clip operation;

FIG. 16 is a block diagram illustrating the pixel processor of FIG. 1; and

FIGS. 17A-17E comprise a flow chart illustrating operation of the pipeline controller of FIG. 3.

Description of the Preferred Embodiment(s)

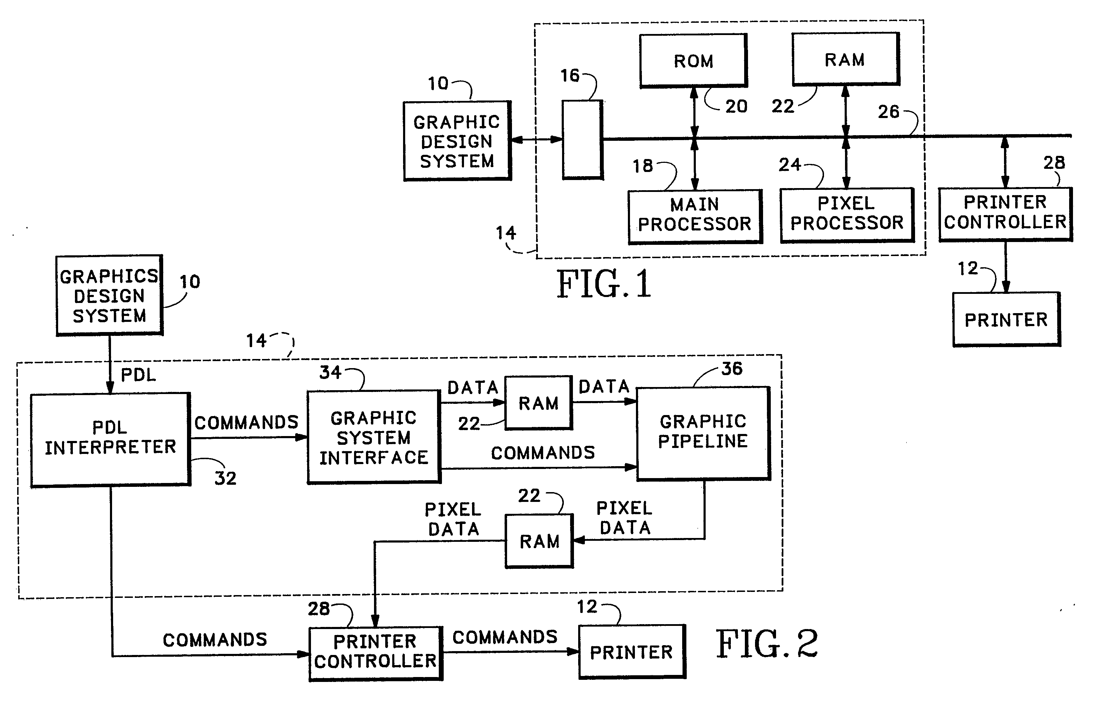

Referring to FIG. 1, a computer-aided graphic design system 10 produces a description of a picture to be printed on a page by a printer 12. The description is written in a picture description language (PDL) describing the picture as a set of graphic objects (characters, lines, rectangles, circles, etc.), each object having various attributes (color, fill pattern, thickness etc.). When the picture is to be printed, the graphics design system 10 transmits the PDL picture description to a picture processing system 14 via port 16. The picture processing system 14 includes a main processor 18 (suitably a Motorola model 68020), a read only memory (ROM) 20, a random access memory (RAM) 22, and a pixel processor 24, all connected to a bus 26. Port 16 directs incoming PDL data onto bus 26.

Operating under instructions in ROM 20 and employing RAM 22 for temporary data storage, main processor 18 converts the input high level picture description into data describing the same picture as a set of pixel lines. The line data indicates coordinates of one end of the line on the page (its origin), a direction of the line from the origin; the length of the line (i.e., the number of pixels spanned by the line), and its color intensity. Main processor 18 transmits the data describing each line to pixel processor 24 via bus 26. Pixel processor 24 processes the data to determine which pixels of the graphic page to ink ("turn on") to form the line. The pixel processor updates a bit map of the page in a portion of RAM 22 accordingly.

The bit map is a set of addressable, 32-bit pixel data words. Each bit or set of bits of each pixel data word corresponds to a particular pixel on the page and indicates the on/off state or color of the corresponding pixel when the page is printed. When processing a line description, the pixel processor 24 addresses and reads a succession of pixel data words out of the bit map, each pixel data word including the bit or bits corresponding to a pixel along the path of the line. For such bits of the pixel data word, the pixel processor determines the on/off state or color of the corresponding pixel and sets the state of the bits accordingly. After altering relevant bits of a pixel data word, the pixel processor writes the altered pixel data word back into the bit map in RAM 22. A printer controller 28 is connected to bus 26 and when pixel processor 24 completes adjusting the bit map in RAM 22, main processor 18 commands printer controller 28 to sequentially read out the pixel data stored in RAM 22 and to transmit printer control data to printer 12 such that printer 12 prints out the graphic page defined by the bit map.

The picture processing system 14 converts the PDL picture description to pixel data using a sequence of software and hardware implemented processing steps as illustrated in FIG. 2. Referring to FIG. 2, a software implemented PDL interpreter 32 forwards PDL commands describing various objects of the graphic design to a software implemented graphic system interface 34. The graphic system interface 34 responds to some of these commands by storing data conveyed by the commands in RAM 22 and by forwarding other commands to a graphic pipeline 36. In response to input commands, the graphic pipeline 36, partly implemented by software routines executed by main processor 18 of FIG. 1 and partly implemented by pixel processor 24 of FIG. 1, carries out a sequence of operations on the stored data to generate pixel data forming the bit map within RAM 22. When the graphic pipeline has processed the graphic data, the PDL interpreter 32 responds to a PDL command to initiate printing by transmitting appropriate commands to printer controller 28. Controller 38 responds by reading the bit map data out of RAM 22 and controlling printer 12 accordingly.

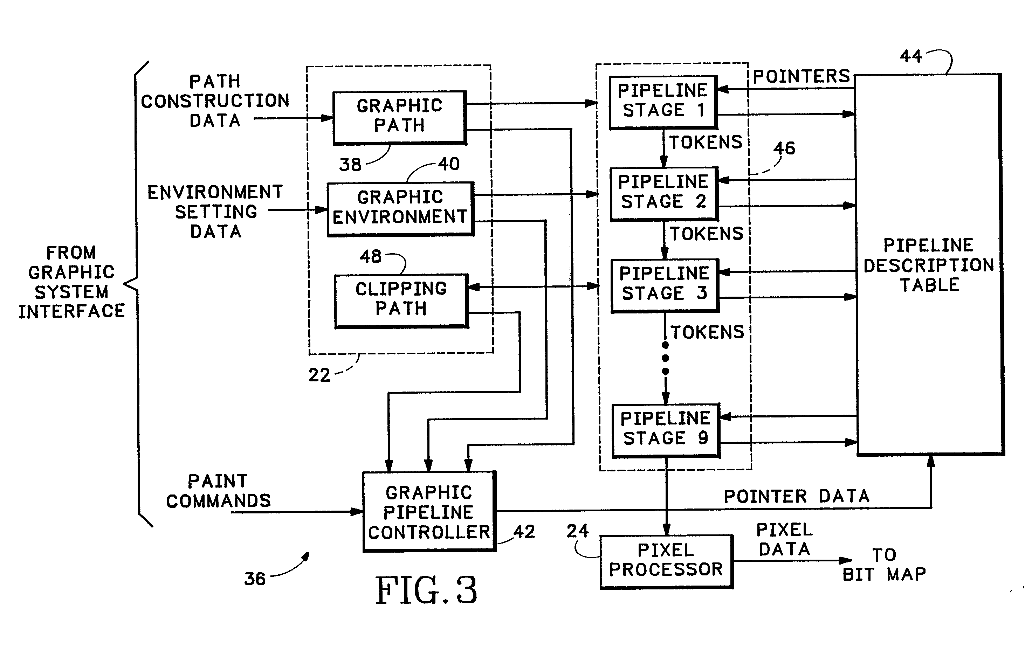

The present invention relates to an improved graphic pipeline 36 of FIG. 2. FIG. 3 is a functional block diagram illustrating organization and data flow within the graphic pipeline. Referring to FIG. 3, the graphic system interface responds to three types of commands. A "path construction" command tells the graphic system interface to adjust contents of a "graphic path" data structure 38 stored in RAM 22 of FIG. 1. This data structure defines the outline and position within a graphic design of one of the objects forming the graphic design. A "graphic environment" command tells the interface system 34 to adjust contents of a "graphic environment" data structure 40 stored in RAM 22. The graphic environment data structure defines various attributes of the object referenced by the graphic path data file. Such attributes may include color, intensity, line thickness, fill pattern, etc. "Paint" commands invoke various operations of the graphic pipeline 36, and the graphic system interface forwards these commands to the graphic pipeline 36.

In the preferred embodiment, there are three types of paint commands. A "fill" paint command treats the graphic path data 38 as describing an outline of a graphic object to be drawn having a fill color, pattern and intensity attributes described by the graphic environment data 40. A "stroke" paint command treats the graphic path data 38 as describing one or more lines to be drawn, each line having a color, thickness, intensity and "dash pattern" described by the graphic environment data 40. A "clip" paint command treats the graphic path data 38 as describing an outline bounding a "clipping" area of the graphic page to which objects drawn by subsequent fill and stroke paint commands are limited.

In response to a clip paint command, various graphic pipeline stages 46 transfer the graphic path data 40 into a "clipping path" data structure 48, also stored in RAM 22. Thereafter, when generating a bit map representation of a graphic object in response to a fill or stroke command, the graphic pipeline 36 consults the graphic path and environment data to determine the shape and position as well as color and other attributes of an object to be drawn. The pipeline may also consult the clipping path data 48 and "clip" portions of the object lying outside the clipping path by excluding those portions from representation in the bit map.

The graphic system interface 34 forwards paint commands to a graphic pipeline controller 42, a software routine executed by the main processor 18 of FIG. 1 that configures and initiates operation of stages 46 of the graphic pipeline. The graphic pipeline 36 includes a set of pipeline stages 46 for carrying out various sequences of data processing operations in response to various paint commands. There are three types of pipeline stages 46. A "source" stage obtains its input data from the graphic path data structure 38, the graphic environment data structure 40 or from the clipping path data structure 48. The source stage processes its input data to produce an output data structure, and passes that output data structure to another stage. (A data structure generated by one stage and passed to another stage is hereinafter called a "graphic token".) A "processor" stage acquires a graphic token from one or more other pipeline stages 46, processes the input token to generate an output token, and passes the output token to yet another pipeline stage. A "consumer" stage acquires an input token from one or more pipeline stage and processes the input token to provide pipeline output data.

The pipeline stages 46 are "demand driven". For each processor stage 46 there are one or more entries in a pipeline description table 44 pointing to software routines implementing or interfacing one or more source or processor stages that are to supply its input tokens. When a subsequent stage of the pipeline invokes operation of ("calls") a processor stage, the processor stage consults the appropriate pointers in the pipeline description table 44 and calls the one or more preceding pipeline stages referenced by the pointers. The processor stage then waits until the preceding stages generate and return their output tokens. Once the processor stage receives its input tokens, the output tokens of preceding stages, it processes its input tokens and generates one or more output tokens. The processor stage then passes its output tokens to its calling pipeline stage.

Consumer stages operate in a similar fashion but are called by the pipeline controller 42 instead of other pipeline stages since they reside at an "end" of the pipeline. Source stages reside at the "front" of the pipeline and obtain input data directly from data structures stored in RAM 22. Source stages do not consult entries in the pipeline description table 44 because they do not call other stages to obtain input data tokens.

Thus the pipeline is "demand driven" because stages call one another to obtain input data. The pipeline controller initiates data processing by calling a consumer stage at the end of the pipeline. The consumer stage in turn calls one or more processor stages to obtain input tokens, and processor stages call other processor stages or source stages to obtain their input tokens. Once a source stage is called, it obtains its input data from a data structure in RAM 22 processes it and returns a token to its calling processor stage. Accordingly, tokens flow from stage to stage until the consumer stage receives and processes its input tokens, thereby producing pipeline output data.

In accordance with the invention, the graphic pipeline does not employ every pipeline stage 46 when executing any particular paint command. When the pipeline controller 42 receives a paint command, the controller determines which pipeline stages 46 to include in the pipeline from the nature of the command, and from the currently stored graphic environment, graphic path and clipping path data. The pipeline controller 42 adjusts pointer data in the pipeline description table 44 such that only the stages needed to execute the sequence of processing operations requested by the command are called, thereby optimizing pipeline operation. Once the pipeline controller 42 has configured the pipeline by storing appropriate pointers in the pipeline description table 44, the controller calls a consumer stage at the end of the pipeline to initiate pipeline operation.

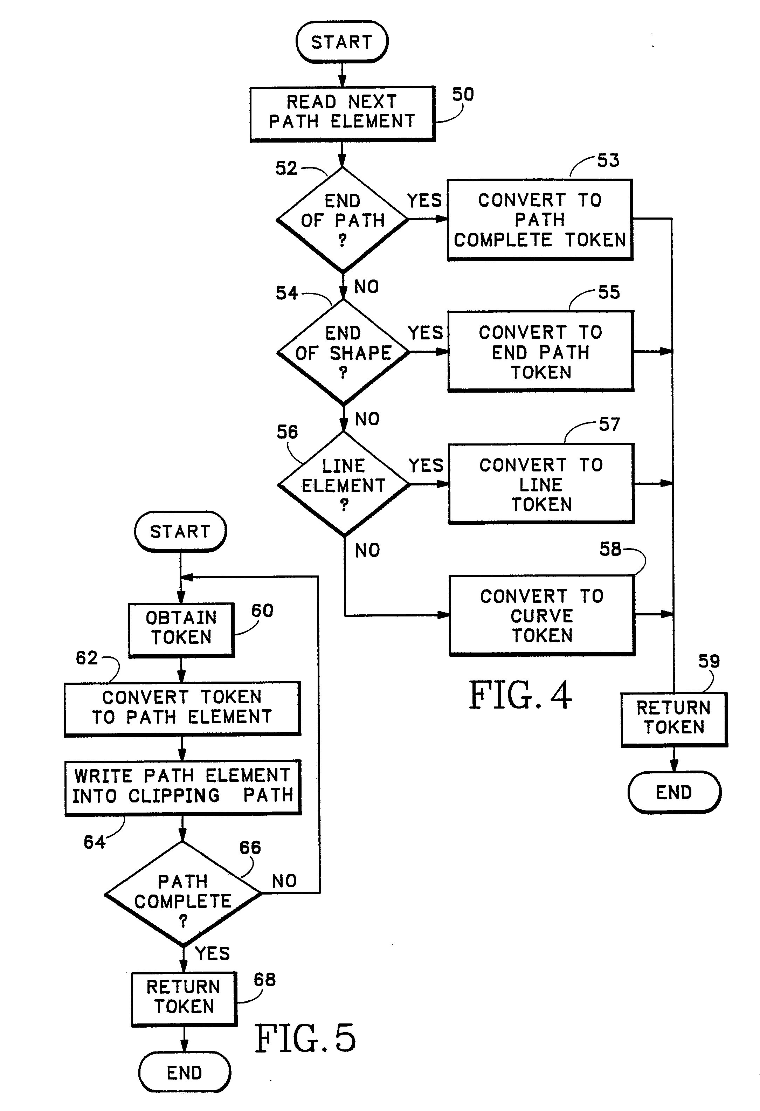

In the preferred embodiment there are nine different pipeline stages 46. FIG. 4 is a flow chart illustrating operation of a "PATH-READER" stage. The PATH-READER stage is a source stage invoked to read data elements out of the graphic path data structure 38 of FIG. 3 and to convert them to output tokens. A sequence of data elements define the graphic path by describing outlines of one or more graphic shapes, such as for example a set of overlapping rectangles, circles etc. Each data element describes a straight or curved line forming a portion of the path of the outline of a shape. An "end of shape" element follows the set of line elements describing the outline of each shape of the graphic path. The last element of the graphic path data is an "end of path" element. Each time another stage calls the PATH-READER stage, the PATH-READER stage reads a next element of the graphic path (step 50). If the element is an "end of path" element indicating that the PATH-READER stage has already read all other data elements of the graphic path (step 52), the PATH-READER stage converts the end of path element to a "Path Complete" token (step 53) and returns the Path Complete token to its calling stage (step 59). If the path element read is an end of shape element (step 54), the PATH-READER stage generates an "End Path" token (step 85) and returns the End Path token to its calling stage (step 59). If the graphic path element read at step 50 defines a straight line (step 56), the PATH-READER stage converts the element to a Line token describing the straight line and returns the Line token to the calling stage (step 59). Otherwise, the element read defines a curved line, and the PATH-READER stage converts the curved line element to a Curve token describing the curved line (step 58) and returns the Curve token (step 59).

A "CLIPPATH-READER stage" stage is similar to the PATH-READER stage of FIG. 4 except that the CLIPPATH-READER stage reads path data elements out of the clipping path data structure 48 of FIG. 3. rather than out of the graphic path data structure 38.

FIG. 5 illustrates a CLIPPATH-WRITER pipeline stage. This is a consumer stage called to write data into the clipping path data structure 48 of FIG. 3. When called, the CLIPPATH-WRITER stage requests a token from a preceding stage of the pipeline (step 60). The CLIPPATH-WRITER stage obtains an input token by first consulting a particular entry in the pipeline description table 44 of FIG. 3 to determine a storage address of a subroutine implementing the stage to supply the token, calls the stage, and awaits return of the token from the called stage. The CLIPPATH-WRITER stage then converts the acquired token into a clipping path element (step 62) and writes the element into the clipping path data structure (step 64). If the last written path element is not a path complete element, the CLIPPATH-WRITER stage returns to step 60 to obtain another input token. The CLIPPATH-WRITER stage continues to loop through steps 60-66 until the stage has written a path complete element into the clipping path. At this point the CLIPPATH-WRITER stage returns a Path Complete token to its invoking stage.

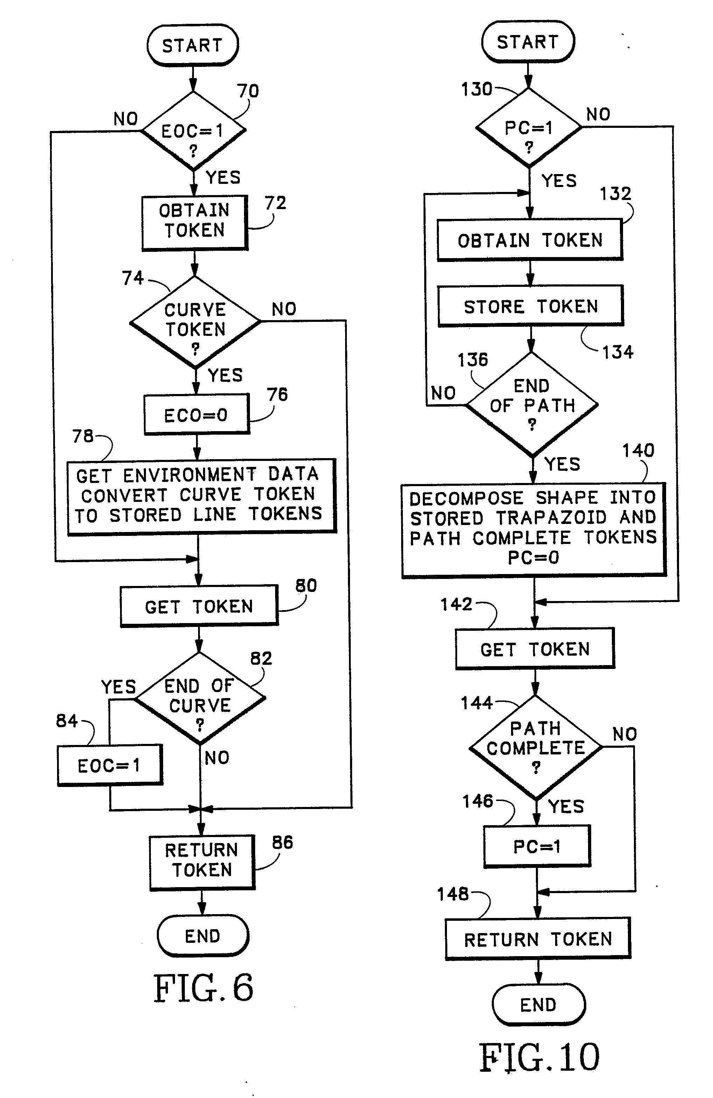

FIG. 6 illustrates a "CURVE-FLATTENER" pipeline stage. This is a processor stage called to convert a Curve token describing a curved line to a series of Line tokens describing a set of straight lines approximating the curved line. When called, the CURVE-FLATTENER stage checks an end of curve (EOC) flag bit stored in RAM 22 of FIG. 1 to determine whether the CURVE-FLATTENER stage has completely processed the last acquired Curve token (step 70). If the flag is true (a logical "1"), the CURVE-FLATTENER stage obtains an input token (step 72) by consulting a particular entry in the pipeline description table 44 to determine a storage address of a subroutine implementing the stage to supply the input token, invokes operation of the referenced stage, and awaits return of the token from the called stage. The CURVE-FLATTENER stage determines if the token is a Curve token (step 74). If not, the CURVE-FLATTENER stage returns the token to its invoking stage (step 86) and terminates operation. However, if the token received is a Curve token (step 74), the CURVE-FLATTENER stage sets the EOC flag false (logical "0") (step 76), converts the acquired Curve token into a sequence of Line tokens followed by an End of Curve token, and stores these tokens in a temporary data structure within RAM 22 of FIG. 1 (step 78). In the course of carrying out step 78, the CURVE-FLATTENER stage consults the environment data structure to determine how long it should make each straight line. This information dictates the degree of accuracy (i.e., the number of straight lines) with which it approximates the curved line.

Thereafter, the CURVE-FLATTENER stage reads a token back out of RAM 22 (step 80) and checks whether the token is the End of Curve token (step 82). If the token is a Line token, the CURVE-FLATTENER stage returns the Line token to its invoking stage. The next time a stage invokes operation of the CURVE-FLATTENER stage, the CURVE-FLATTENER stage checks the EOC flag (step 70) and finds EOC to be false. In such case, the CURVE-FLATTENER stage skips to step 80, reads a next token out of its temporary data structure in RAM 22 of FIG. 1, and determines whether the token is an End of Curve token (step 82). If not, the stage returns the token to its calling stagee (step 86). The CURVE-FLATTENER stage continues to bypass steps 72-78 and to return the next Line token stored in memory whenever called until, at step 82, the stage encounters the End of Curve token. At this point the CURVE-FLATTENER stage sets the EOC flag true (step 84) and returns the End of Curve token to the intoking stage (step 86). The next time the CURVE-FLATTENER stage is invoked, it obtains and processes another input Curve token at steps 72-78.

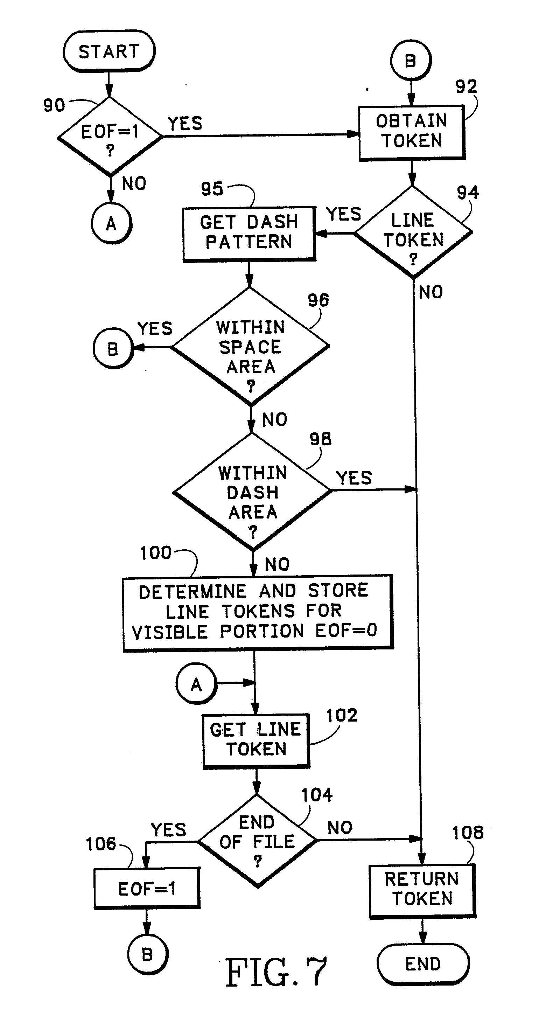

FIG. 7 illustrates a "DASHER" pipeline stage for converting an input Line token describing a line to a series of output Line tokens forming drawn segments (dashes) of a dashed line of similar length. The Dasher determines the length of each drawn segment and the length of each "undrawn segment" (the spaces between the dashes) in accordance with a dash pattern stored in the graphic environment data structure. The dash pattern is an array of data specifying "dash" areas of a graphic page where dash segments of the dashed line are drawn and "space" areas of the page where segments of a dashed line are not drawn. When called, the DASHER stage checks an end of file (EOF) flag bit stored in RAM 22 to determine if the DASHER stage has completed the last line dashing operation (step 90). If the flag is true (a logical "1"), the DASHER stage obtains an input token (step 92) from another stage by consulting an entry in the pipeline description table and invoking the referenced stage. If the input token is not a Line token (step 94), the DASHER stage returns the token to its invoking stage (step 108) and terminates operation.

However, if the input token is a Line token (step 94), the DASHER stage reads the dash pattern data out of the graphic environment (step 95) and determines whether the line defined by the Line token resides wholly within a space area of the dash pattern (step 96). This may happen when the line is very short. In such case, the "dashed" line is not drawn. The DASHER stage simply discards the input Line token and calls the preceding stage to obtain another input token (step 92). When the DASHER stage obtains a Line token describing a line not wholly within an undrawn, space, area of the dash pattern (step 96), the DASHER stage determines whether the line is wholly within a dash area of the dash pattern (step 98). If so, the dashed line will appear on the printed page as a single "dash" of the same length as the undashed line represented by the input Line token. Therefore, the DASHER stage returns its input Line token to its invoking stage without further processing (step 108).

Otherwise, if the line described by the input Line token passes through both dash and space areas of the dash pattern, the DASHER stage generates and stores a data file in RAM 22 of FIG. 1 (step 100). The data file includes a set of output Line tokens describing each visible segment of the line described by its input Line token. The DASHER stage also sets the EOF flag false and thereafter reads the first output Line token out of the data file (step 102). If the DASHER stage reads a Line token rather than an end of file marker from the token file (step 104), the DASHER stage returns the Line token to its invoking stage (step 108) and terminates. The next time the DASHER stage is called, it finds that the EOF flag is not true (step 90). It thereupon skips to step 102, reads the next Line token out of the token file and returns the token to the requesting stage. The DASHER stage continues to read Line tokens out of the token file whenever called until the DASHER stage encounters an end of file marker rather than a Line token (step 104). At this point the DASHER stage sets the EOF flag true (step 106) and returns to step 92 to request another Line token from a preceding stage.

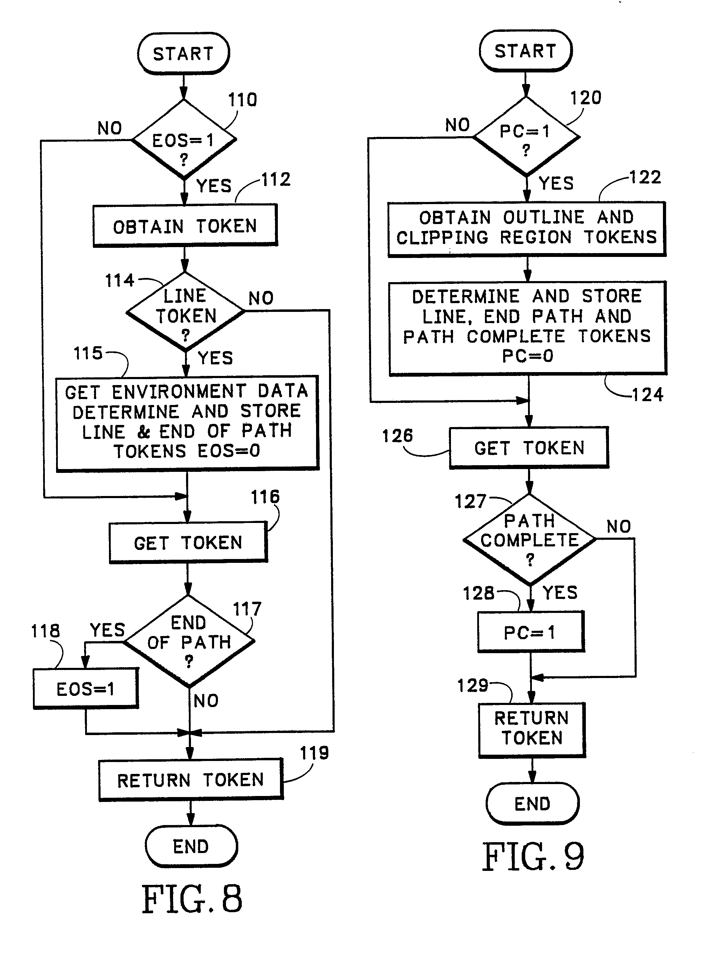

FIG. 8 illustrates a "STROKER" pipeline stage called to convert a single input Line token to four output Line tokens forming edges of a rectangle. The rectangle has a length equal to the length of the line described by the input Line token and a width determined by line width data stored in the graphic environment data structure. When called, the STROKER stage checks a counter N maintained in RAM 22 of FIG. 1 to determine if an EOS flag is true (step 110). If so, the STROKER stage requests a Line token from a preceding pipeline stage (step 112). If the input token received is not a Line token (step 114), the STROKER stage returns its input token to its invoking stage (step 119) and terminates operation. However, if the input token is a Line token (step 114), the STROKER stage reads the line width data out of the graphic environment and produces and stores in RAM 22 of FIG. 1 the four output Line tokens defining the rectangle edges and an End of Path token (step 115). Also in step 115, the STROKER stage sets the EOS flag false. The STROKER stage then reads a token out of memory, (step 116), and if the token is a Line token and not an End of Path token, it returns the edge Line token to its invoking stage (step 119) before ending its operation. When next called, the STROKER stage determines the EOS flag is false (step 110) and skips to step 116 to obtain and return a next token from memory.

The STROKER stage continues to return stored Line tokens when called until the stage has returned all four Line tokens. When next called, the STROKER encounters the End of Path token or step 117, sets the EOS flag true at set 118 and returns the End of Path token at step 119.

FIG. 9 illustrates a "CLIPPER" pipeline stage. The CLIPPER stage requests input tokens from two different predecessor stages. One predecessor stage supplies a series of tokens representing the outline of an area to be drawn. The other predecessor stage supplies a series of tokens representing the outline of the current clipping region. The CLIPPER stage returns a series of Line End Path, and Path Complete tokens representing the shape of an area of intersection of the graphic path and clipping path regions.

When called, the CLIPPER stage checks a path complete flag (PC) stored in RAM 22 of FIG. 1 to determine whether the flag is true (step 120). If so, the CLIPPER stage obtains the graphic and clipping path tokens by a series of calls to its predecessor stages, determines and stores output tokens including a set of Line End of Path and Path Complete tokens representing the area of intersection, and sets the PC flag false (step 124). The CLIPPER stage thereafter reads a first output token out of memory (step 126) and determines whether the token is a Path Complete token (step 127). If not, the CLIPPER stage returns the token to its invoking stage (step 129) and terminates operation. Thereafter, when subsequently called the CLIPPER stage detects a false PC flag (step 120), skips to step 126, reads another token out of memory and returns the token to its invoking stage. The CLIPPER stage continues to read and return a stored output token whenever called until the CLIPPER stage encounters a Path Complete token at step 127. At this point, it sets the PC flag true (step 128), and returns the Path Complete token to the invoking stage (step 129). When next called, the CLIPPER stage finds the PC flag true and repeats steps 122 and 124 before going on to step 126.

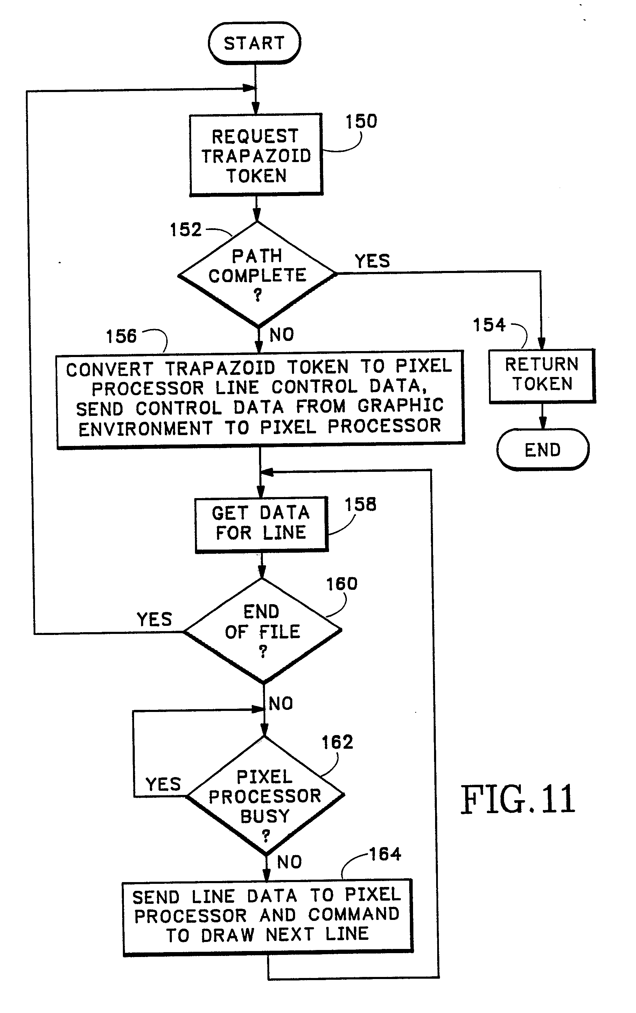

FIG. 10 illustrates a "DECOMPOSER" pipeline stage. The DECOMPOSER pipeline stage repeatedly requests Line tokens defining outlines of a graphic shape from a processor stage until the DECOMPOSER stage encounters an End Path token. The DECOMPOSER stage saves the Line tokens received, and following receipt of the End Path token, it decomposes the shape defined by the Line tokens into a set of trapezoids and produces a set of output Trapezoid tokens, each Trapezoid token defining a separate one of the trapezoids.

Referring to FIG. 10, the DECOMPOSER stage first checks a path complete flag (PC) stored in RAM 22 to determine if the flag is true (step 130). If so, the DECOMPOSER stage obtains a token from a preceding stage (step 132), stores the token (step 134) and determines whether the token is an End of Path token (step 136). If not, the DECOMPOSER stage repeats steps 132, 134 and 136 until it encounters an End of path token at step 136. The DECOMPOSER stage decomposes the shape defined by the tokens stored at step 134 into Trapezoid tokens and stores those tokens in RAM 22 of FIG. 1 along with a Path Complete token (step 140). The DECOMPOSER stage also sets the PC flag false at step 140. The DECOMPOSER stage then reads an output token out of memory (step 142) and checks whether the output token is the Path Complete token (step 144). If not, the DECOMPOSER stage returns the read out Trapezoid token to its invoking stage (step 148) and ends its operation. Thereafter, when subsequently invoked, the DECOMPOSER stage detects the PC flag is false (step 130), skips to step 142, obtains another output token from memory and returns the token to the invoking stage. The DECOMPOSER stage continues to return stored Trapezoid tokens to its invoking stage until it encounters the Path Complete token at step 144. At this point the DECOMPOSER stage sets the PC flag true (step 146) and returns the Path Complete token to the invoking stage (step 148). The next time the DECOMPOSER stage is called, it detects a true PC flag at step 130 and thereafter repeats steps 132-140 to obtain new input tokens and to generate a new set of output Trapezoid tokens before going on to step 142.

FIG. 11 illustrates operation of software implemented portion of a consumer-type "PIXELATOR" stage. The Pixel processor 24 of FIG. 1 is a hardware implementation of another portion of the PIXELATOR stage. When called, the PIXELATOR stage requests a Trapezoid token from a preceding pipeline stage. The Trapezoid token defines the edges of trapezoid to be drawn with color and intensity attributes determined by the graphic environment data structure. The software portion of the PIXELATOR stage converts the graphic environment data into control data for the pixel processor 24 of FIG. 1 and transmits the control data to the pixel processor. The PIXELATOR stage also converts the Trapezoid token into data describing a set of parallel lines of pixels forming the trapezoid and sends the data for each line in succession to the pixel processor. The pixel processor converts input data describing each line into pixel data stored in the bit map.

When invoked, the PIXELATOR stage requests a Trapezoid token from a preceding stage (step 150), but if the preceding stage instead returns a Path Complete token (step 162), the PIXELATOR stage simply returns the Path Complete token to its invoking stage (step 154) and terminates. Otherwise, the PIXELATOR stage converts the received Trapezoid token into data defining a set of parallel pixel lines forming the trapezoid and stores that data in a file in RAM 22 of FIG. 1 (step 156). Also in step 156 the PIXELATOR stage reads data defining attributes of the line from the graphic environment structure and stores this data in appropriate registers in the pixel processor for controlling subsequent operation of the pixel processor. Thereafter, the PIXELATOR stage retrieves data from the data file (step 158). If the retrieved data is not an end of file (EOF) marker (step 160), the data defines a line forming a portion of the trapezoid. In such case, the PIXELATOR stage repeatedly reads a BUSY indicating data bit stored in an addressable register within the pixel processor to determine if the pixel processor is busy processing the last received line data (step 162). When PIXELATOR stage finds the pixel processor is not busy, it transmits the line data to the pixel processor and commands the pixel processor to process the line data (step 164).

The pixel processor responds by appropriately adjusting appropriate pixel data bits in the bit map to "draw" the line into the bit map such that the line is subsequently printed with a color and half tone intensity determined by the attribute control data previously transmitted to the pixel processor at step 156. The PIXELATOR stage continues to repeat steps 158-164 until it has read out and transmitted all its stored line data to the pixel processor. Upon encountering the end of file marker at step 160, the PIXELATOR stage returns to step 150 to obtain another Trapezoid token. The PIXELATOR stage continues to obtain and process Trapezoid tokens in this manner until the PIXELATOR stage encounters a Path Complete token at step 152. At that point the PIXELATOR stage returns the Path Complete token to its calling stage (step 154) and terminates operation.

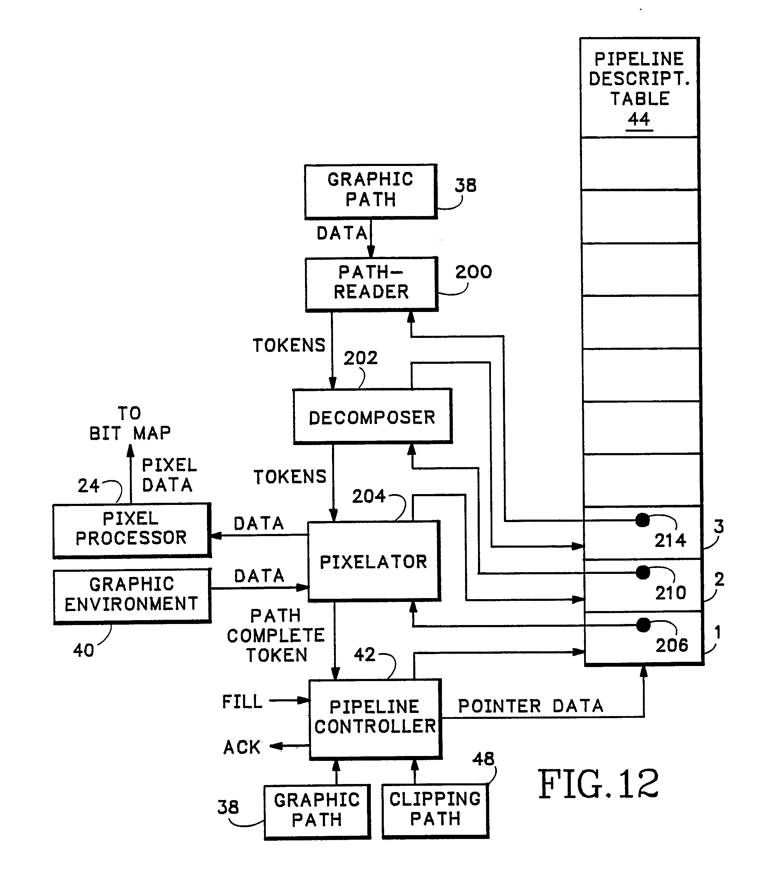

FIG. 12 illustrates an example operation of the graphic pipeline 36 of FIG. 3 in response to a "fill" type paint command wherein the pipeline generates pixel data representing an object of shape, color and intensity defined by the graphic path and graphic environment data and stores the pixel data in the bit map. In this example, the graphic path, the outline of a graphic object, currently stored in the graphic path data structure 38 contains no curved lines and does not extend beyond the boundaries defined in the clipping path data structure 48. The pipeline controller 42 knows the fill command requires the pipeline to employ the PATH-READER stage 200, DECOMPOSER stage 202 and PIXELATOR stage 204. The pipeline controller 42 also knows that if the graphic object to be drawn has boundaries defined by curved lines the pipeline must also employ the CURVE-FLATTENER stage. Further if the graphic object extends beyond the boundaries defined by the clipping path, the pipeline must also incorporate the clipping stage and the clipping PATH-READER stage.

Therefore, on receipt of the fill command, the pipeline controller 42 initially checks the graphic path data 38 defining the object outline, and in this example determines the outline includes no curved lines. The pipeline controller also compares the graphic path data 38 to the clipping path data 48 and discovers that since the object is within the clipping area, the pipeline need not clip the graphic path. Thereafter, the pipeline controller 42 stores a pointer 206 in an entry 1 pointing to the memory address of the software routine implementing PIXELATOR stage 204, stores a pointer 210 stored in an entry 2 pointing to the routine implementing DECOMPOSER stage 202, and a stores a pointer 214 in an entry 3 pointing to the routine implementing PATH-READER stage 200.

The pipeline controller 42 then consults entry 1 and invokes operation of the PIXELATOR stage 204 referenced by pointer 206. The PIXELATOR stage 204 requires an input Trapezoid token and always checks pipeline description table entry 2 to determine the memory address of the software routine implementing the stage to supply its input token. Checking entry 2, the PIXELATOR stage determines that it should call DECOMPOSER stage 202, and does so. The DECOMPOSER stage 202 requires as input a set of tokens describing the outline of a graphic object, and the DECOMPOSER stage decomposes the object into a set of Trapezoid tokens. The DECOMPOSER stage 202 always checks table entry 3 to find a pointer to its source of Line tokens, and here discovers a pointer to the PATH-READER stage 200. The PATH-READER stage is a source stage and does not consult an entry in the pipeline description table 44 to determine its source of input data. Instead, the PATH-READER stage immediately reads path data out of the graphic path structure 38 and returns a token describing a line of the path to the DECOMPOSER stage 202. The DECOMPOSER stage continues to call the PATH-READER stage until the PATH-READER stage has returned all the tokens needed to define one shape of the graphic path including a terminating End of Path token. At that point, the DECOMPOSER stage computes a set of Trapezoid tokens and returns the first Trapezoid token to the PIXELATOR stage. Or subsequent calls the DECOMPOSER stage continues to decompose shapes of the graphic path until it encounters and returns a Path Complete token.

The PIXELATOR stage obtains color and intensity environment data from the graphic environment data structure 40 and sends that data to the pixel processor 24. The PIXELATOR stage then converts the Trapezoid token into data describing the set of pixel lines forming the trapezoid defined by the Trapezoid token and successively sends data describing each line to the pixel processor 24. The pixel processor alters the bit map accordingly. The PIXELATOR stage 204 continues to call the DECOMPOSER stage 202 to obtain Trapezoid tokens for processing until the DECOMPOSER stage sends a Path Complete token to the PIXELATOR stage. The PIXELATOR stage forwards the Path Complete token to the pipeline controller 42 and terminates its operation. The pipeline controller 42 responds by returning a message acknowledging completion of the fill command to the graphic system interface 34 of FIG. 2.

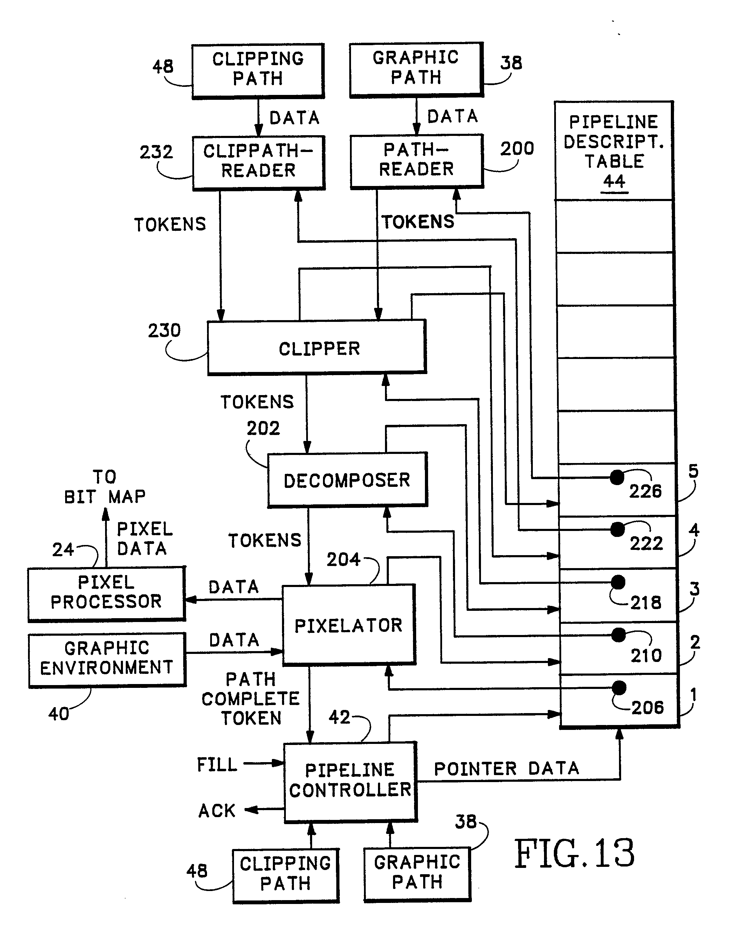

FIG. 13 illustrates operation of the graphic pipeline 36 of FIG. 3 in response to a "fill" type paint command when the graphic object defined by the graphic path data structure 38 contains no curved lines but extends beyond the clipping area defined by the clipping path data structure 48. On receipt of the fill command, the pipeline controller 42 initially checks the graphic path data 38 and the clipping path data 48 and discovers that the pipeline need not process curved lines but must clip the graphic object to fit within the clipping area. Thereafter, the pipeline controller 42 stores pointers in the pipeline description table 44, including a pointer 206 stored in entry 1 pointing to the software routine implementing PIXELATOR stage 204 and a pointer 210 stored in entry 2 pointing to the routine implementing DECOMPOSER stage 202. In entry 3 accessed by the DECOMPOSER stage 202, the pipeline controller stores a pointer 218 to CLIPPER stage 230 because the DECOMPOSER stage must now obtain its input tokens form the CLIPPER stage 230 rather than directly from the PATH-READER stage 200. The CLIPPER stage 230 always looks in table entries 4 and 5 for pointers to the two stages providing its input data tokens. Here the pipeline controller 42 has stored in these entries pointers 222 and 226 to the CLIPPATH-READER stage 232 and the PATH-READER stage 200.

After adjusting the pointers in table 44, the pipeline controller 42 consults entry 1 and invokes operation of the PIXELATOR stage 204 referenced hy pointer 206. The PIXELATOR stage 204 checks table entry 2 and calls DECOMPOSER stage 202 to obtain an input Trapezoid token. The DECOMPOSER stage 202 checks table entry 3 and calls CLIPPER stage 230 to request its input tokens. When called by the DECOMPOSER stage 202, the CLIPPER stage 230 checks entries 4 and 5 to determine the sources of the clipping and graphic path shapes and finds these entries point to the clipping PATH-READER stage 232 and PATH-READER stage 200.

In response to repeated calls from the CLIPPER stage 230, the CLIPPATH-READER stage 232 and PATH-READER stage 200 acquire data from the clipping path structure 48 and graphic path structure 38 and return the appropriate tokens to the CLIPPER stage 230. The CLIPPER stage 230 then calculates and returns tokens to the DECOMPOSER stage 202, each token describing a line bounding the clipped graphic object to be drawn. On successive calls, the DECOMPOSER stage 202 continues to call the CLIPPER stage 230 to acquire all the tokens defining a graphic path and decomposes the path into a set of Trapezoid tokens returned to the PIXELATOR stage 204. The PIXELATOR stage operates as previously described, obtaining environment data from the graphic environment data structure 40, setting up the pixel processor 24 accordingly, converting Trapezoid tokens into line data, sending the line data to the pixel processor 24, and finally forwarding a Path Complete token to the pipeline controller 42.

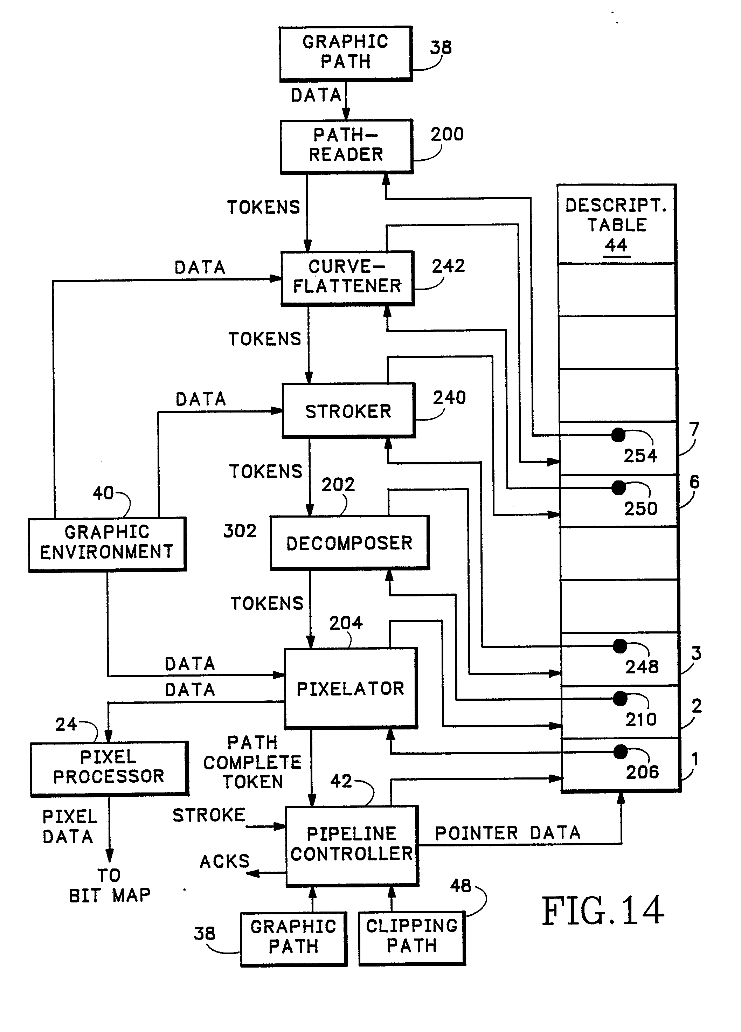

FIG. 14 illustrates operation of the graphic pipeline 36 of FIG. 3 in response to a stroke type paint command when the graphic object defined by the graphic path data structure 38 contains curved lines but does not extend beyond the clipping boundary and the DASHER stage is not needed. On receipt of the stroke command, the pipeline controller 42 initially checks the graphic path data 38 and the clipping path data 48 and discovers that the pipeline must process curved lines but need not clip the graphic object to fit within the clipping area or handle dashed lines. Thereafter, the pipeline controller 42 again stores pointers in the pipeline description table 44 including a pointer 206 in an entry 1 pointing to the PIXELATOR stage 204 and a pointer 210 in an entry 2 pointing to the DECOMPOSER stage 202. In table entry 3. always accessed by the DECOMPOSER stage 202, the pipeline controller stores a pointer 248 to STROKER stage 240 since the DECOMPOSER stage must now obtain its input tokens from the STROKER stage. The STROKER stage 240 always looks in table entry 6 for a pointer to the stage providing its input data tokens. The pipeline controller 42 has stored a pointer 250 in table entry 6 pointing to the CURVE-FLATTENER stage 242. The CURVE-FLATTENER stage 242 always looks in table entry 7 for a pointer to its data source, and here the pipeline controller 42 has stored a pointer 254 referencing PATH-READER stage 200.

After adjusting the pointers in table 44, the pipeline controller 42 consults entry 1 and invokes operation of the PIXELATOR stage 204 referenced by pointer 206. The PIXELATOR stage 204 checks table entry 2 and calls DECOMPOSER stage 202 to obtain an input Trapezoid token. The DECOMPOSER stage 202 consults table entry 3 and repeatedly calls the STROKER stage 240. When called. the STROKER stage consults entry 6 and calls the referenced CURVE-FLATTENER stage 242 to obtain input Line tokens. The CURVE-FLATTENER stage in turn calls the PATH-READER stage 200 to acquire Tokens defining the graphic path. In response, the PATH-READER stage acquires path data from the graphic path data structure 38 and returns the appropriate Line and Curve tokens to the CURVE-FLATTENER stage. The CURVE-FLATTENER stage simply returns its input Line tokens to the STROKER stage but processes input Curve tokens to produces a set of approximating Line tokens sequentially returned to the STROKER stage, consulting the graphic environment data structure 40 to determine how many straight Line tokens to employ when approximating the curved line indicated by its input Curve token.

As previously described, the STROKER stage 240 converts each input Line token to a set of four output Line tokens and an End of Path token defining edges of a rectangle of length equal to the length of the line referenced by the input Line token and of width indicated by graphic environment data. On repeated calls, the STROKER stage 240 returns each set of five output tokens to the DECOMPOSER stage 202 for processing into Trapezoid tokens returned to the PIXELATOR stage 204. The PIXELATOR stage obtains color and intensity environment data from the graphic environment data structure 40, sets up the pixel processor 24 accordingly, converts input Trapezoid tokens into line data, and sends the line data to the pixel processor 24. When the PIXELATOR stage 204 receives a Path Complete, it forwards the Path Complete token to the pipeline controller 42 and the controller returns a message to the pipeline interface acknowledging execution of the stroke command.

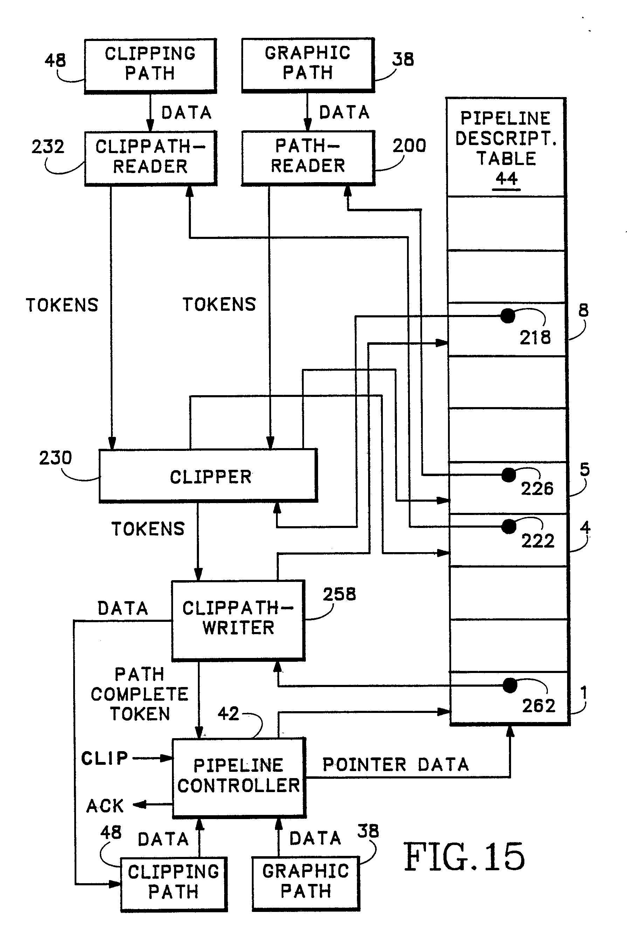

FIG. 15 illustrates operation of the graphic pipeline 36 of FIG. 3 in response to a clip type paint command. On receipt of the clip command, the pipeline controller 42 initially checks the graphic path data 38 and the clipping path data 48 and discovers a proposed new clipping area defined by the graphic path 38 which includes portions outside the area of the current clipping path 48. In the preferred embodiment, the clipping region is initially set by default to the page boundaries and the graphic pipeline permits a user to thereafter decrease the clipping region but prevents the user from increasing the clipping region. Since portions of the proposed clipping region extend beyond the current clipping region, the controller 42 configures the pipeline to "clip" portions of the area defined by the graphic path 38 extending beyond the current clipping region when writing the graphic path 38 into the clipping path data structure 48 to establish a new clipping region. Thereafter, the pipeline controller 42 stores pointers in the pipeline description table 44, including a pointer 262 stored in entry 1 pointing to the CLIPPATH-WRITER 25S, pointers 222 and 226 in entries 4 and 5 pointing to the CLIPPATH-READER stage 232 and the PATH-READER stage 200, and a pointer 218 stored in table entry 8 pointing to the CLIPPER stage 230.

After adjusting the pointers in table 44, the pipeline controller 42 consults entry 1 and invokes operation of the CLIPPATH-WRITER stage 258. The CLIPPATH-WRITER stage checks table entry 8 to determine its source of input tokens and calls CLIPPER stage 230. The CLIPPER stage consults entries 4 and 5 and repeatedly calls the CLIPPATH-READER stage 232 and the PATH-READER stage 200. In response to the repeated calls, the CLIPPATH-READER stage 232 and PATH-READER stage 200 acquire data from the clipping path structure 48 and graphic path structure 38 and return the appropriate tokens to the CLIPFER stage 230. The CLIPPER stage 230 thereupon calculates and returns tokens to the CLIPPATH-WRITER stage 258, each token describing a line bounding the new clipping area. The CLIPPATH-WRITER converts these tokens into data stored in clipping path data structure 48. When the CLIPPATH-WRITER stage encounters an input Path Complete token, it forwards the path Complete token to the pipeline controller 42, and the pipeline controller responds by returning to the graphic interface a message acknowledging execution of the clipping command.

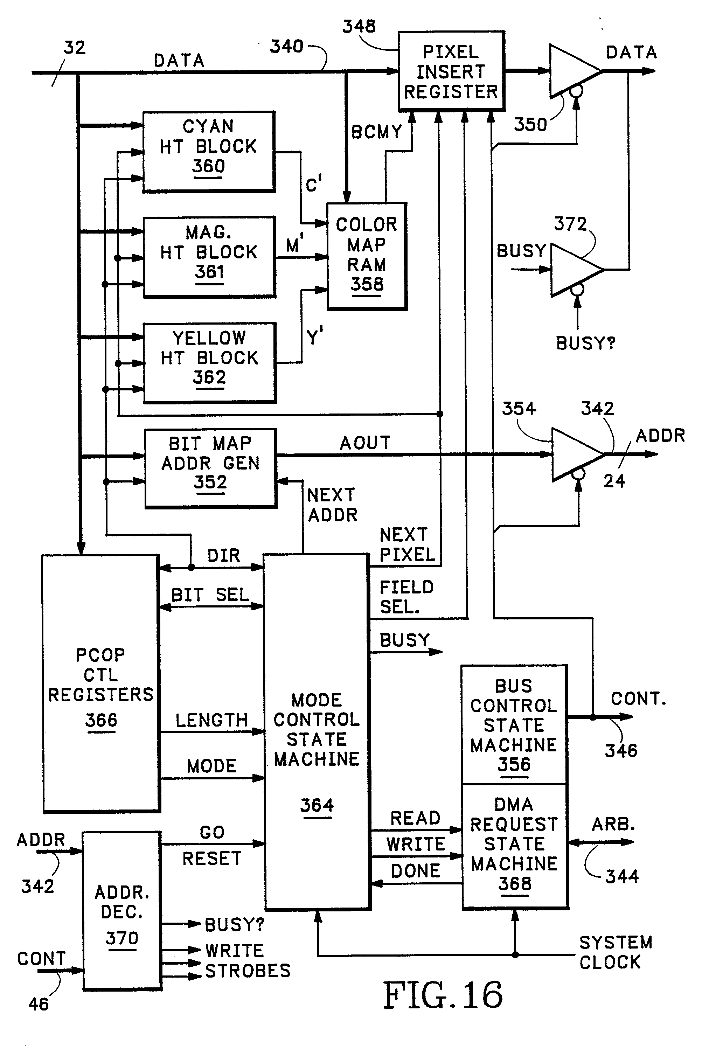

FIG. 16 illustrates the pixel processor 24 of FIG. 1 in block diagram form. The pixel processor implements a portion of the PIXELATOR stage and converts line data into bit mapped pixel data using a predetermined half toning scheme to give lines an apparent intensity. The function of the pixel processor could be carried out by a software routine but the dedicated hardware pixel processor carries out the pixel processing operation more rapidly.

Referring to FIG. 16, bus 26 of FIG. 1 is the standard bus for the Motorola model 68020 microprocessor and includes a 32-bit data bus 340, a 24-bit address bus 342, a set of arbitration lines 344, and control lines 346. A pixel insert register 348 stores a pixel data word read out of RAM 22 of FIG. 2 via data bus 340. When processing a line, the pixel processor adjusts states of one or more bits of the pixel data word stored in pixel insert register 348. The pixel processor thereafter places the altered pixel data word back on data bus 340 via a tristate buffer 350 and writes the data word back into the bit map. During both read and write operations, a bit map address generator 352 places the appropriate RAM address on address bus 342 via a tristate buffer 354, and a bus control state machine 356 generates signals on bus control lines 346 controlling the memory read and write operations.

For a monochrome printer, each 32-bit pixel data word controls 32 horizontally contiguous pixels. For a four color printer, each 32-bit pixel data word controls 8 pixels of each of the four primary color types. The states of one to four selected data bits of a pixel data word stored in pixel insert register 348 are simultaneously set in accordance with states of output data bits B, C, M, and Y produced by a color map RAM 358 in response to input bits from cyan, magenta and yellow "half tone" blocks 360, 361 and 362, respectively. For a monochrome printer, only one bit of the pixel data word is adjusted at a time to a state indicated by the C output bit of RAM 358. For a four color printer, the pixel processor simultaneously sets four bits of the pixel data word in accordance with all four of the RAM 358 output bits.

Each half tone block 360-362 stores graphic environment control data forwarded by the PIXELATOR stage of FIG. 11 indicating intensity threshold levels of cells of a half tone array for the corresponding primary color and also indicating the intensity level for a line being processed. For each cyan pixel along the path of a line, cyan half tone block 360 determines the position of the pixel within the half tone block, compares the threshold level of the pixel with the desired intensity level of the line, and generates its output bit C' indicating whether the intensity threshold level is less than the desired line intensity. The magenta and yellow half tone blocks 361 and 362 operate in a similar fashion to produce M' and Y' output bits indicating on/off states of adjacent magenta and yellow pixels. The C', M' and Y' bits address color map RAM 358, and RAM 358 reads out an addressed four bit data word BCMY. The PIXELATOR stage loads graphic environment data into the color map via data bus 340 to adjust for differences in color schemes used by printers.

A mode control state machine 364 responds to input data stored in a set of control registers 366 indicating line direction (DIR), line length (number of pixels) and various modes of operation. A BIT SEL field tells the mode control state machine 364 the next bit or set of bits within the data word in pixel insert register 348 to process. The mode control state machine 364 generates a FIELD SELECT output signal to select the particular bit or bits of the 32-bit pixel data word stored in pixel insert register 348 set in accordance with the current color map RAM 358 output.

The PIXELATOR stage software supplies the bit map address generator with data indicating the bit map address of a pixel data word containing a bit corresponding to the origin of a line to be drawn. After each pixel data word is processed, the mode control state machine 364 transmits a NEXT ADDRESS signal to bit map address generator 352. In response, the bit map address generator 352 alters its current address output AOUT in accordance with the DIR field to select the pixel data word containing the next pixel in the line path. State machine 364 then transmits a READ request signal to a DMA (direct memory access) request state machine 368. State machine 368 uses arbitration lines 344 to obtain control of bus 26 of FIG. 1. When state machine 368 obtains control of the bus, it transmits a READ request signal to bus control state machine 356. State machine 356 sets buffer 354 to place the AOUT address on address bus 342 and transmits control signals causing RAM 22 to read out the pixel data word at that address and causing pixel insert register 348 to store the pixel data word. Thereafter, the bus control state machine 356 returns a signal to DMA request state machine 368 indicating it has completed rhe requested read operation. State machine 368 then sends a DONE signal back to mode control state machine 364.

The mode control state machine sequentially transmits NEXT PIXEL signal pulses to each half tone block 360-62 and to pixel insert register 348. Each NEXT PIXEL pulse tells the half tone blocks to generate a next output bit indicating on/off state of a next pixel of the line and tells the pixel insert register to store one or more of the current output bits of color map RAM 358 in place of bits in the pixel insert register. The FIELD SELECT signals select the bit or bits replaced.

When appropriate bits in the pixel data word stored in pixel insert register 348 are set, the mode control state machine 364 transmits a WRITE signal to DMA request state machine 368 which again gains control of the system bus and requests the bus control state machine 356 to write pixel data into the bit map RAM. Bus control state machine 356 sets buffer 350 to place the pixel data content of pixel insert register 348 on data bus 340, sets buffer 354 to again place the address output AOUT of address generator 352 on address bus 342, and then asserts control signals 346 writing the pixel data on data bus 340 back into RAM 22 of FIG. 2. Thereafter, bus control state machine 356 turns off buffers 350 and 354 and returns an acknowledge signal to DMA request state machine 368. DMA request state machine 368 again transmits the DONE signal to mode control state machine 364 to announce the pixel data word was written back into memory. If the pixel process has not yet processed all pixels of the line, mode control state machine 364 initiates another pixel data word read/write/modify cycle by transmitting another NEXT ADDRESS signal pulse to the bit map address generator 352. The process continues until all pixel data words containing pixels along the path of the line have been read, modified, and written back into the bit map memory.

When the main processor transmits data via data bus 340 to a control register 366, to a half tone block 360-62, to bit map address generator 352, or to color map RAM 358, it places an appropriate address on the address bus 342 and asserts signals on control lines 346. These signals tell an address decoder 370 to transmit an output strobe signal pulse enabling the register or device to receive the data. One particular address on address bus 342 tells the address decoder to assert a GO signal to mode control state machine 364. This signal tells state machine 364 to start processing a line.

While the pixel processor is actively processing pixel data for a line, the mode control state machine 364 continues to assert a BUSY output bit. When the PIXELATOR stage wishes to transmit data to the pixel processor, it periodically determines whether the pixel processor is busy by causing address decoder 370 to assert an output BUSY? signal. The BUSY? signal makes buffer 372 place the BUSY bit on a line of the data bus 340. The state of the BUSY bit on data bus 340 tells the PIXELATOR stage when the pixel processor has completed processing the line.

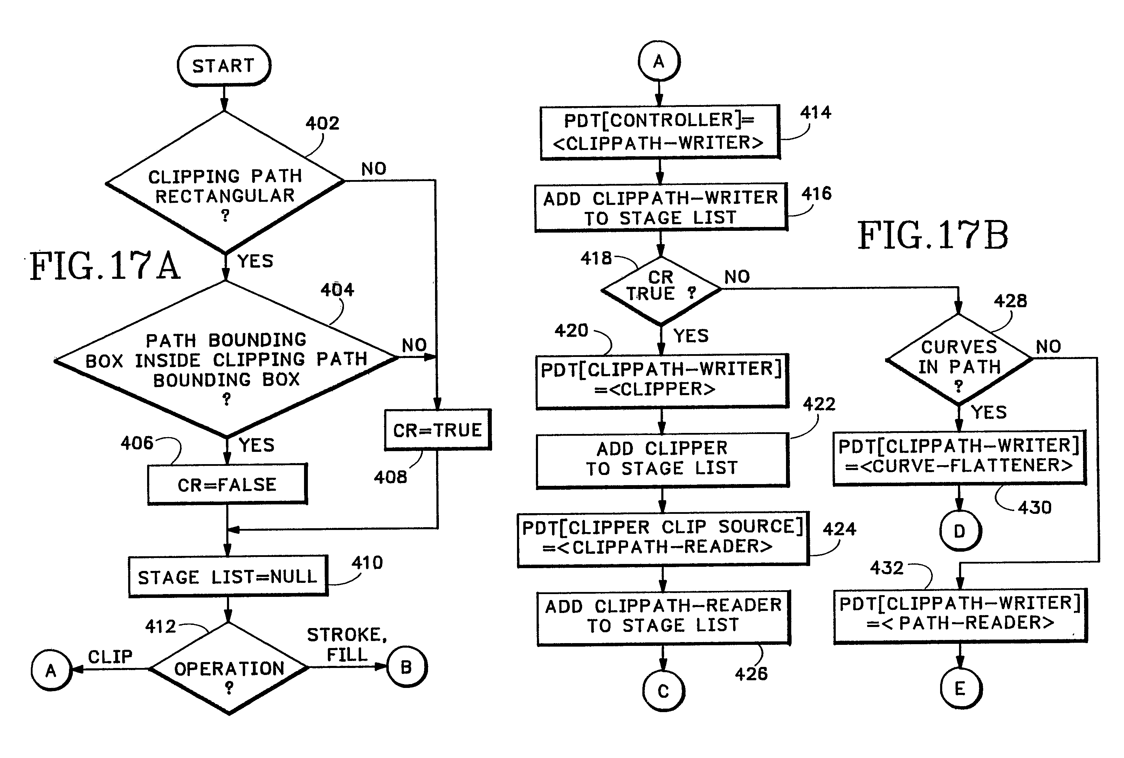

As discussed herein above the pipeline controller 42 of FIG. 3 responds to various commands requesting processing operations by configuring the graphic pipeline to include only those stages needed to carry out the requested operation. The pipeline controller then calls the last stage of the pipeline to initiate pipeline operation. FIGS. 17A-17E comprise a flow chart illustrating operation of the graphic pipeline controller 42 of FIG. 3 in response to a paint command.

Referring to FIG. 17A, starting at step 402, the controller determines whether the clipping path is rectangular. If the clipping path is rectangular, the controller further determines whether the graphic path bounding box is inside the clipping path bounding box (step 404). If so, the controller sets a CR (clipping required) flag false (step 406). If the clipping path is not rectangular (step 402) or its bounding box is not inside the clipping path bounding box (step 404), the controller sets the CR flag true (step 408). The controller maintains a record of all stages to be incorporated into the pipeline in a "stage list", a file stored in memory. After appropriately setting the CR flag, the controller initially nulls all entries in the stage list (step 410).

Referring to FIGS. 17A and 17B, if the paint command requests a clip operation (step 412), the controller sets a ".controller" entry in the pipeline description table to point to the CLIPPATH-WRITER stage (step 414) and adds the CLIPPATH-WRITER stage to the stage list (step 416). (The controller calls the routine pointed to by the controller entry when subsequently initiating pipeline data processing.) If the CR flag is true (step 418), clipping is required, and the controller sets the entry referenced by the CLIPPATH-WRITER stage to point to the CLIPPER stage (step 420) and adds the CLIPPER stage to the stage list (step 422). The controller then sets the pipeline description table entry referenced by the CLIPPER stage when seeking a source of clipping path tokens such that the entry points to the CLIPPATH-READER stage (step 424). The controller also adds the CLIPPATH-READER stage to the stage list (step 426).

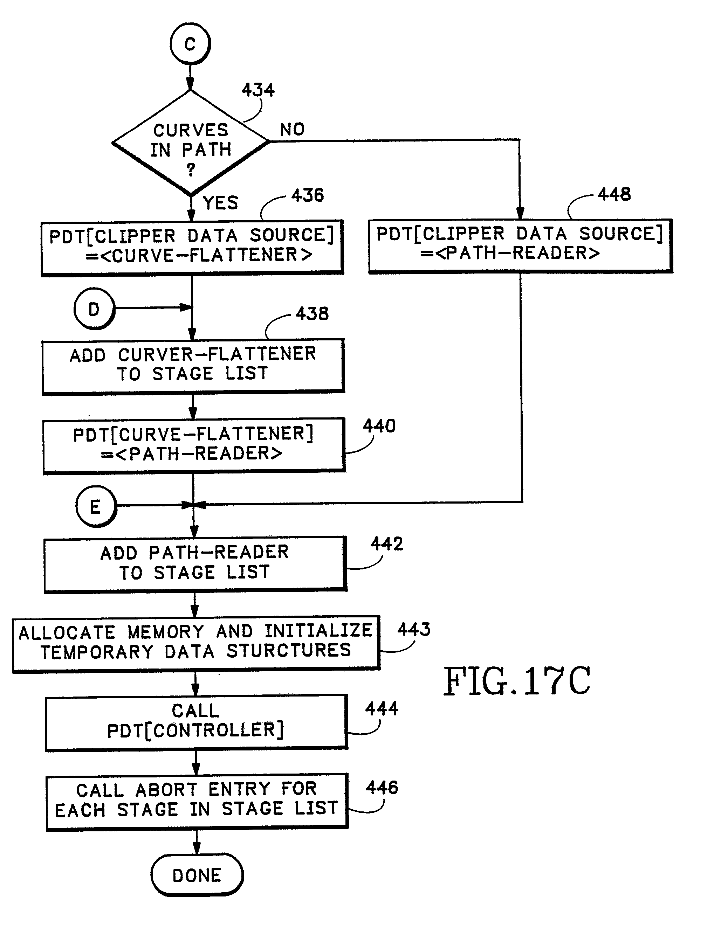

Referring to FIG. 17C, the controller thereafter checks the graphic path data structure to determine if the graphic path includes any curved lines (step 434). If not, the controller sets the pipeline description table entry accessed by the CLIPPER stage when seeking input graphic path tokens so that the entry points to the PATH-READER stage (step 448). However, if there are curves in the graphic path at step 434, the controller sets that pipeline description table entry to point to the CURVE-FLATTENER stage (step 436), adds the CURVE-FLATTENER stage to the stage list (step 438), and places a pointer to the PATH-READER stage in the pipeline description table entry read by the CURVE-FLATTENER stage when seeking input tokens (step 440). After step 440 or after step 448, the controller adds the PATH-READER stage to the stage list (step 442) and allocates memory for and initializes any temporary data structures in memory utilized by stages on the stage list (step 443). The controller then calls the routine referenced by the controller entry of the pipeline description table (step 444). When the pipeline has completed processing the input data, the controller calls an ABORT ENTRY routine for each stage referenced by the stage list (step 446). This routine deallocates memory utilized by the various stages to store temporary data structures. The controller routine then terminates.

Referring to FIG. 17B, if the CR flag is not true at step 418, the controller checks the graphic path data structure to determine if there are any curves in the path (step 428). If not, the controller sets the pipeline description table entry referenced by the CLIPPATH-WRITER stage to point to the PATH-READER stage (step 432). If the controller finds curved lines in the path at step 428, it sets the pipeline description table entry referenced by the CLIPPATH-WRITER stage to point to the CURVE-FLATTENER stage (step 430). Following steps 430 or 432 of FIG. 17B, the controller continues operation at steps 438 or 442, respectively, of FIG. 17C as described hereinabove.

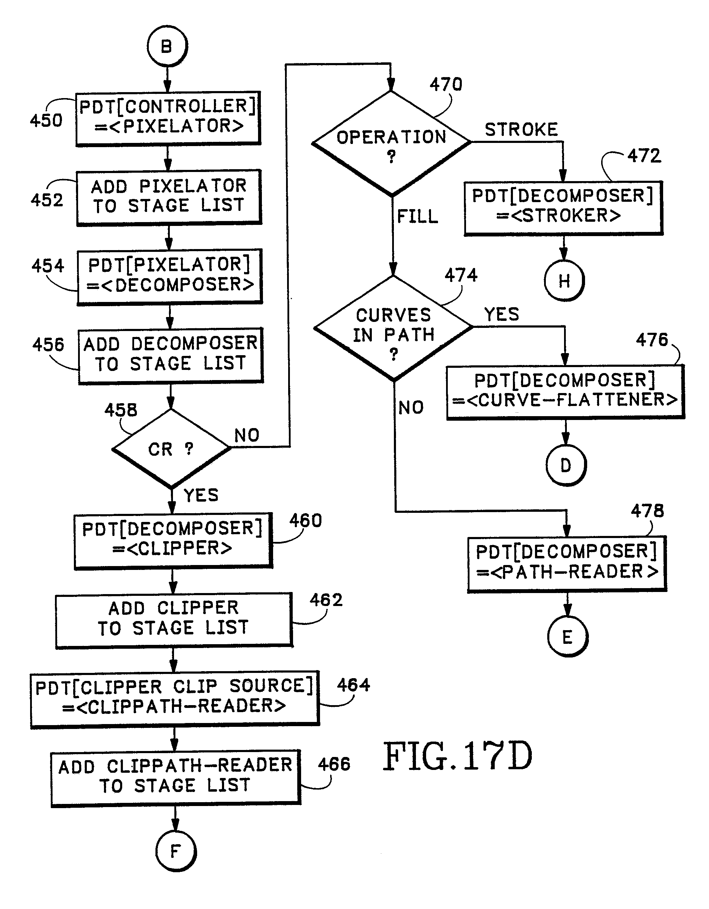

Referring to FIGS. 17A and 17D, if the input paint command requests a stroke or fill operation (step 412), the controller sets the controller entry in the pipeline description table to point to the PIXELATOR stage (step 450) and adds the PIXELATOR stage to the stage list (step 452). The controller also sets the table entry referenced by the PIXELATOR stage to point to the DECOMPOSER stage (step 454) and adds the DECOMPOSER stage to the stage list (step 456). If CR is true at step 458, clipping is required. The controller therefore sets the entry referenced by the DECOMPOSER stage to point to the CLIPPER stage (step 460) and adds the CLIPPER stage to the stage list (step 462). The controller then places a pointer to the CLIPPATH-READER stage in the pipeline description table entry accessed by the CLIPPER stage when seeking a source of clipping path tokens (step 464) and adds the CLIPPATH-READER stage to the stage list (step 466).

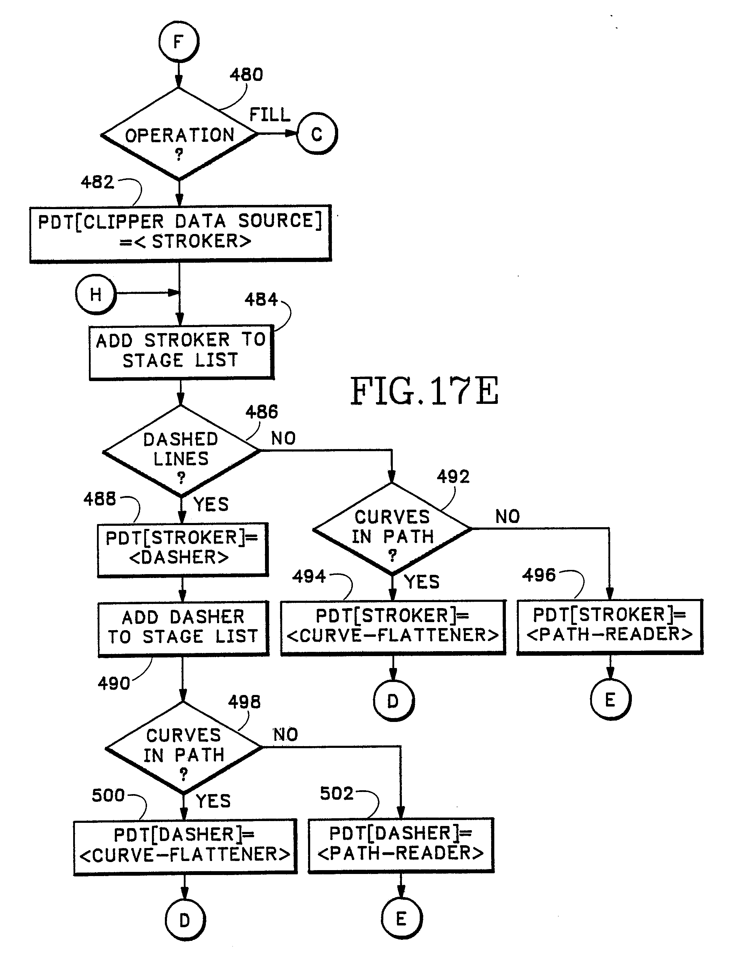

Referring to FIG. 17E, the controller then determines whether the paint command requests a fill operation (step 480), and if so, the controller continues at step 434 of FIG. 17C in a manner described hereinabove. However, if the paint command requests a stroke operation (step 480) the controller places a pointer to the STROKER stage in the pipeline description table entry referenced by the CLIPPER stage (step 482) and adds the STROKER stage to the stage list (step 484). The controller checks the graphic path data structure to determine whether the graphic path includes any dashed lines (step 486). If so, the controller sets the pipeline desoription table referenced by the STROKER stage to point to the DASHER stage (step 488) and adds the DASHER stage to the stage list (step 490). The controller next checks the graphic path data structure to determine whether the graphic path includes any curved lines (step 498). If the graphic path includes curved lines, the controller sets the pipeline description table entry accessed by the DASHER stage to point to the CURVE-FLATTENER stage (step 500) and moves on to step 438 of FIG. 17C. If the controller finds no curved lines in the graphic path at step 498 of FIG. 17E, it stores a pointer to the PATH-READER stage in the pipeline description table entry consulted by the DASHER stage (step 502) and continues operation at step 442 of FIG. 17C.

If at step 486 of FIG. 17E, the controller determines that the graphic path includes no dashed lines, it checks the graphic path data structure to determine whether the graphic path includes curved lines (step 492). If so, the controller sets the pipeline description table entry referenced by the STROKER stage to point to the CURVE-FLATTENER stage (step 494) and continues at step 438 of FIG. 17C. If the controller finds no curves in the graphic path at step 492 of FIG. 17E, it stores a pointer to the STROKER stage in the pipeline description table entry consulted by the PATH-READER stage (step 496) and resumes operation at step 442 of FIG. 17C.

Referring to FIG. 17D, if the CR flag is false at step 458, and the input paint command requests a stroke operation (step 470), the controller places a pointer to the STROKER stage in the pipeline description table consulted by the DECOMPOSER stage and moves on to step 484 of FIG. 17E. continuing therefrom as described hereinabove. However, if at step 470 the controller finds that the paint command requests a fill operation, the controller checks the graphic path data structure to determine whether the graphic path includes any curved lines (step 474). If the path includes curved lines, the controller sets the pipeline description table entry referenced by the DECOMPOSER stage to point to the CURVE FLATTENER stage (step 476) and moves to step 438 of FIG. 17C. If the controller finds no curves in the graphic path at step 474, it stores a pointer to the PATH-READER stage in the pipeline description table entry consulted by the DECOMPOSER stage (step 47S) and continues operation at step 442 of FIG. 17C.

A dynamically configurable data processing pipeline has been described having a set of stages, each carrying out separate data processing operation. The pipeline is demand driven in that stages obtain input data by calling preceding stages, and when called each stage processes its input data to produce output data returned to its caller. A stage determines which other stage or stages to call by inspecting one or more entries in the pipeline description table containing pointers to the other stages. The pipeline controller responds to input commands requesting various types of pipeline data processing operations by adjusting the pointers in the pipeline description table so that only stages necessary to execute the command are called. Since the controller excludes unnecessary stages from the pipeline when executing each particular command, the pipeline operates more quickly and efficiently than a conventional pipeline including all stages needed to process every type of command.

While a preferred embodiment of the present invention has been shown and described, it will be apparent to those skilled in the art that many changes and modifications may be made without departing from the invention in its broader aspects. The appended claims are therefore intended to cover all such changes and modifications as fall within the true spirit and scope of the following claims.

## Claims

1. A demand driven, graphics pipeline for executing a sequence of data processing operations converting graphic data describing a graphic object into pixel data forming a bit map of the object, comprising:
memory means (22) for storing said pixel data;
a plurality of pipeline stages (46, 24) including a first stage and a last stage,
each stage other than said last stage obtaining input data when called by another of said stages and carrying out a separate data processing operation on its input data to produce output data and returning said output data as input data to its calling stage,
each stage other than said first stage obtaining input data by calling another of said stages,
said first stage obtaining said graphic data as input data when called,
said last stage obtaining and processing input data to generate said pixel data as output data and storing said pixel data in said memory means when called; and
pipeline controller means (42) for calling said last stage.

2. The demand driven, graphics pipeline in accordance with claim 1 wherein said memory means stores a plurality of pipeline description table entries, each entry being referenced by a separate one of said stages and storing adjustable pointer data referencing another of said stages, such that when called, each stage referencing an entry reads the pointer data stored in the referenced entry, invokes operation of another stage referenced by the pointer data, and obtains as input data output data produced by said another stage.

3. The demand driven, graphics pipeline in accordance with claim 2 wherein said pipeline controller means adjusts the pointer data in pipeline description table entries prior to calling said last stage such that only stages necessary to execute a particular sequence of operations are called after said pipeline controller means calls said last stage.

4. A dynamically configurable, demand driven, data processing pipeline for executing differing sequences of data processing operations requested by differing input commands, comprising:
a plurality of stages (46), each stage, when called, carrying out a separate one of said data processing operations by obtaining and processing input data to produce output data;
a pipeline description table (44) comprising a plurality of entries, each entry being referenced by a separate one of said stages and storing adjustable pointer data referencing another of said stages, such that when called each stage referencing an entry reads the pointer data stored in the referenced entry, calls another stage referenced by the pointer data, and obtains as input data output data produced by said another stage; and
a pipeline controller (42) for adjusting the pointer data in the pipeline description table in response to each input commands such that operations of only stages necessary to execute a particular sequence of operations requested by the input command are called during pipeline execution of the particular sequence of operations.

5. A dynamically configurable, demand driven, data processing pipeline for executing various sequences of data processing operations requested by differing input commands, comprising:
memory means (22) storing at separate addresses a plurality of stage routines, a controller software routine, and a plurality of description table entries, each entry being referenced by a separate one of said stage routines and storing a pointer referencing a storage address in said memory means of another of said stage routines; and
a computer processor (18) accessing said memory means for reading out and executing said stage and controller routines stored in said memory means, for reading pointers out of said description table entries, and for writing pointers into said description table entries,
such that when executed, each particular stage routine that references a description table entry causes the computer processor to read a pointer stored in the referenced table entry and to execute another stage routine referenced by the pointer thereby to produce input data for the particular stage routine, the particular stage routine thereafter causing said computer processor to process said input data to produce output data, and wherein said controller routine, when executed, causes said computer processor to respond to any particular input command by storing pointers in description table entries such that the computer processor thereafter executes only stage routines necessary to execute a particular sequence of operations requested by the input command in the course of executing a first of said stage routines, and such that said controller routine causes said computer processor to commence execution of said first of said stage routines.

6. The data processing pipeline in accordance with claim 5 further comprising:
data processing means (24) for carrying out a data processing operation producing output data in response to input data; and
a bus (26) said data processing means to said computer processor, said bus conveying the input data to the data processing means, one of said stage routines causing said computer processor to transmit said input data to said data processing means via said bus.

7. A dynamically configurable, demand driven, graphics data processing pipeline for executing various sequences of data processing operations requested by differing input commands converting pipeline input data describing a picture into pixel data forming a bit m p of said picture, comprising:

memory means (22) storing said pipeline input data, said pixel data, a plurality of stage routines, a controller routine, and a plurality of description table entries, each entry being referenced by a separate one of said stage routines and containing an adjustable pointer referencing another of said stage routines:

a computer processor (18) for reading out and executing said stage and controller routines stored in said memory means, for reading pointers out of said description table entries, and for writing pointers into said description table entries,

wherein a first stage routine causes said computer processor to obtain input data by reading said pipeline input data out of said memory means,

wherein each particular stage routine that references a description table entry causes the computer processor to read a pointer stored in the referenced table entry and to execute another stage routine referenced by the pointer thereby producing input data for the particular stage routine,

wherein a last stage routine causes said computer processor to produce output data describing primitive graphic objects forming said picture,

wherein said controller routine causes said computer processor to respond to each particular input command by storing pointers in description table entries such that the computer processor thereafter executes only stage routines necessary to execute a particular sequence of operations requested by the input command in the course of executing said last stage routine, and such that said controller routine causes said computer processor to commence execution of said last stage routine; and

pixel processing means (24) for converting the output data describing said primitive graphic objects into said pixel data forming a bit map of said primitive graphic objects and for storing said pixel data in said memory means.

8. The dynamically configurable, demand driven, graphics data processing pipeline in accordance with claim 7 further comprising a bus (26) interconnecting said pixel processing means, said computer processor and said memory means, said bus conveying the data describing a primitive graphic shape to the pixel processing means, conveying said pixel data from said pixel processor to said memory means, and conveying data between said memory means and said computer processor.

9. A method implemented by a computer processor (118) for executing each of a plurality of differing sequences of data processing operations converting input data into output data, each sequence of data processing operations being requested by a differing input command, the method comprising the steps of: storing in memory means (22) a plurality of stage routines (46) and a plurality of description table (44) entries, each entry being referenced by a separate one of said stage routines and storing a pointer referencing another of said stage routines, each stage routine when executed by said computer processor causing said computer processor to carry out a separate one of said data processing operations, each stage routine that references a description table entry being such that in the course of executing the stage routine, the computer processor reads a pointer stored in the referenced table entry and executes another stage routine referenced by the pointer; and

responding to each particular input command by first storing pointers in said description table entries such that when thereafter executing a first of said stage routines, only stage routines necessary to execute a particular sequence of operations requested by the input command are also executed, and then executing said first of said stage routines.

FIG.1

FIG.2

EP 0 357 444 A2

FIG.3

FIG. 4

FIG. 5

START

70 EOC=1 ?

NO

YES

OBTAIN TOKEN 72

74 CURVE TOKEN ?

NO

YES

ECO=0 76

78 GET ENVIRONMENT DATA CONVERT CURVE TOKEN TO STORED LINE TOKENS

GET TOKEN 80

82 END OF CURVE ?

YES

84 EOC=1

NO

RETURN TOKEN 86

END

FIG.6

START

130 PC=1 ?

NO

YES

OBTAIN TOKEN 132

STORE TOKEN

134

136 END OF PATH ?

NO

YES

DECOMPOSE SHAPE INTO STORED TRAPAZOID AND PATH COMPLETE TOKENS PC=0 140

142 GET TOKEN

144 PATH COMPLETE ?

NO

YES

146 PC=1

148 RETURN TOKEN

END

FIG.10

START

B

**90** EOF=1 ? — YES → **92** OBTAIN TOKEN

NO

A

**95** GET DASH PATTERN ← YES — **94** LINE TOKEN ?

NO

**96** WITHIN SPACE AREA ? — YES → B

NO

**98** WITHIN DASH AREA ? — YES →

NO

**100** DETERMINE AND STORE LINE TOKENS FOR VISIBLE PORTION EOF=0

A →

**102** GET LINE TOKEN

**104** END OF FILE ?

YES → **106** EOF=1 → B

NO → **108** RETURN TOKEN → END

FIG. 7

START

110

NO — EOS=1 ?

YES — 112

OBTAIN TOKEN

114 — LINE TOKEN ? — NO

YES

115 — GET ENVIRONMENT DATA DETERMINE AND STORE LINE & END OF PATH TOKENS EOS=0

116 — GET TOKEN

END OF PATH ? — 117

118 — YES — EOS=1

NO

119 — RETURN TOKEN

END

FIG.8

START

120

NO — PC=1 ?

YES — 122

OBTAIN OUTLINE AND CLIPPING REGION TOKENS

DETERMINE AND STORE LINE, END PATH AND PATH COMPLETE TOKENS PC=0

124

126 — GET TOKEN

127 — PATH COMPLETE ? — NO

128 — YES — PC=1

129 — RETURN TOKEN

END

FIG.9

START

REQUEST TRAPAZOID TOKEN — 150

152 — PATH COMPLETE ?

YES

154 — RETURN TOKEN

END

NO

156 — CONVERT TRAPAZOID TOKEN TO PIXEL PROCESSOR LINE CONTROL DATA, SEND CONTROL DATA FROM GRAPHIC ENVIRONMENT TO PIXEL PROCESSOR

GET DATA FOR LINE — 158

160 — END OF FILE ?

YES

NO

162 — PIXEL PROCESSOR BUSY ?

YES

NO

164 — SEND LINE DATA TO PIXEL PROCESSOR AND COMMAND TO DRAW NEXT LINE

FIG. 11

FIG.12

FIG.13

FIG.14

FIG.15

FIG.16

## FIG.17A

START
↓

402 CLIPPING PATH RECTANGULAR ? — NO →

↓ YES

404 PATH BOUNDING BOX INSIDE CLIPPING PATH BOUNDING BOX ? — NO →

↓ YES

406 CR=FALSE

408 CR=TRUE

↓

410 STAGE LIST=NULL

↓

412 OPERATION ?

CLIP → A

STROKE, FILL → B

## FIG.17B

A
↓

414 PDT[CONTROLLER]= <CLIPPATH−WRITER>

↓

416 ADD CLIPPATH−WRITER TO STAGE LIST

↓

418 CR TRUE ? — NO →

↓ YES

420 PDT[CLIPPATH−WRITER] =<CLIPPER>

↓

422 ADD CLIPPER TO STAGE LIST

↓

424 PDT[CLIPPER CLIP SOURCE] =<CLIPPATH−READER>

↓

426 ADD CLIPPATH−READER TO STAGE LIST

↓

C

428 CURVES IN PATH ? — NO →

↓ YES

430 PDT[CLIPPATH−WRITER] =<CURVE−FLATTENER>

↓

D

432 PDT[CLIPPATH−WRITER] =<PATH−READER>

↓

E

EP 0 357 444 A2

C

434

CURVES
IN PATH
?

NO

YES

436

PDT[CLIPPER DATA SOURCE]
=<CURVE-FLATTENER>

448

PDT[CLIPPER DATA SOURCE]
=<PATH-READER>

D

438

ADD CURVER-FLATTENER
TO STAGE LIST

PDT[CURVE-FLATTENER]
=<PATH-READER>

440

E

ADD PATH-READER
TO STAGE LIST

442

ALLOCATE MEMORY AND INITIALIZE
TEMPORARY DATA STURCTURES

443

CALL
PDT[CONTROLLER]

444

CALL ABORT ENTRY FOR
EACH STAGE IN STAGE LIST

446

DONE

FIG.17C

B

450 ── PDT[CONTROLLER]
=<PIXELATOR>

452 ── ADD PIXELATOR
TO STAGE LIST

454 ── PDT[PIXELATOR]
=<DECOMPOSER>

456 ── ADD DECOMPOSER
TO STAGE LIST

458 ── CR ?  ── NO

YES

460 ── PDT[DECOMPOSER]
=<CLIPPER>

462 ── ADD CLIPPER
TO STAGE LIST

464 ── PDT[CLIPPER CLIP SOURCE]
=<CLIPPATH-READER>

466 ── ADD CLIPPATH-READER
TO STAGE LIST

F

470 ── OPERATION ?  ── STROKE

472 ── PDT[DECOMPOSER]
=<STROKER>

H

FILL

474 ── CURVES IN PATH ?  ── YES

476 ── PDT[DECOMPOSER]
=<CURVE-FLATTENER>

D

NO

478 ── PDT[DECOMPOSER]
=<PATH-READER>

E

FIG.17D

## FIG.17E

```
                    ( F )
                      │
                      ▼              480
                 ╱─────────╲        FILL
                ╱ OPERATION ╲──────────▶ ( C )
                ╲     ?     ╱
                 ╲─────────╱
       482            │
        │             ▼
   ┌──────────────────────────────┐
   │  PDT[CLIPPER DATA SOURCE]     │
   │      =<STROKER>               │
   └──────────────────────────────┘
                      │
   ( H )──────▶       ▼              484
   ┌──────────────────────────────┐
   │    ADD STROKER TO             │
   │      STAGE LIST               │
   └──────────────────────────────┘
                      │
                      ▼              486
                 ╱─────────╲       NO
                ╱  DASHED   ╲──────────────────────┐
                ╲  LINES    ╱                      │
                 ╲    ?    ╱                        ▼              492
                  ╲───────╱                    ╱─────────╲
       488            │ YES                   ╱  CURVES   ╲   NO
        │             ▼                       ╲ IN PATH  ╱──────────────┐
   ┌──────────────────┐                        ╲    ?   ╱               │
   │  PDT[STROKER]=   │                         ╲──────╱                │
   │   <DASHER>       │            494              │ YES          496   │
   └──────────────────┘             │               ▼                │   ▼
                      │    ┌────────────────────────┐    ┌─────────────────────┐
                      ▼    │   PDT[STROKER]=        │    │   PDT[STROKER]=      │
   ┌──────────────────┐    │  <CURVE-FLATTENER>     │    │  <PATH-READER>       │
   │  ADD DASHER      │    └────────────────────────┘    └─────────────────────┘
   │  TO STAGE LIST   │                 │                           │
   └──────────────────┘                 ▼                           ▼
       490            │               ( D )                       ( E )
                      ▼              498
                 ╱─────────╲       NO
                ╱  CURVES   ╲──────────────────┐
                ╲ IN PATH  ╱                    │
                 ╲    ?   ╱                      │
                  ╲──────╱                       │
       500            │ YES           502        ▼
        │             ▼                │
   ┌────────────────────────┐    ┌────────────────────────┐
   │   PDT[DASHER]=         │    │   PDT[DASHER]=          │
   │  <CURVE-FLATTENER>     │    │  <PATH-READER>          │
   └────────────────────────┘    └────────────────────────┘
                │                           │
                ▼                           ▼
             ( D )                       ( E )
```